# EUROPEAN PATENT SPECIFICATION

(11) **EP 1 577 748 B1**
(45) Date of publication and mention of the grant of the patent: **03.10.2007**
(21) Application number: 04256417.9
(22) Date of filing: 19.10.2004
(51) Int. Cl.: G06F 3/06, G06F 1/00

(54) **Storage system and computer system**
Speichersystem und Rechnersystem
Système de stockage et système informatique

(30) Priority: 18.03.2004 JP 2004079119
(43) Date of publication of application: 21.09.2005
(60) Divisional application: 06005039.0
(73) Proprietor: Hitachi, Ltd., Tokyo 100-8280 (JP)
(72) Inventor: Nagasoe, Yasuyuki, Hitachi, Ltd., Chiyoda-ku Tokyo 100-8220 (JP); Honma, Hisao, Hitachi, Ltd., Chiyoda-ku Tokyo 100-8220 (JP)
(74) Representative: Holt, Daniel Richard

(56) References cited:
- US-A- 5 592 618
- US-A1- 2003 159 058
- US-A1- 2003 229 764

## Description

This application relates to and claims priority from Japanese Patent Application No. 2004-79119, filed on March 18, 2004.

The present invention relates to a storage system and computer system.

Conventional technology relating to access control of logical devices in a RAID system by a host and to a logical device security function includes the disk control method disclosed in Japanese Patent Application Laid Open No. 2000-112822, for example. This method sets, for each logical device in the RAID system, any one of three types of access attribute modes, which are 'readable and writable', 'unwritable', and 'unreadable and unwritable', and changes processes and responses to commands from the host for each logical device in accordance with the setting.

Furthermore, data stored in the logical devices includes data for which the period over which this data must be stored ('data storage period' hereinafter) is established according to the Law, data that is semi-permanent, and so forth. Further, the data storage period is sometimes longer than the lifetime (MTBF (Mean Time Between Failure), for example) of the physical device (hard disk drive, for example) that comprises the logical device. In this case, as data is stored in one logical device, data is corrupted irrespective of the data storage period due to failure in accordance with the lifespan of the physical device.

As a method for preventing this problem before it occurs, a method that suitably copies data in a certain logical device to another logical device in a different physical device whose failure generation time is further in the future than the physical device comprising the logical device may be considered.

In cases where this method is adopted, there is sometimes a need to protect the copy data thus copied to a different logical device in the same manner as the source data. This is so that copying is not performed in vain.

Further, when the method above is adopted, it is considered desirable to increase the reliability of the copy data. This is because data can thus be saved more stably.

When the method above is adopted, it is thought that the consumption of the storage capacity in accordance with the copying of data is desirably suppressed. This is because a larger amount of data can be saved if storage capacity can be spared.

US 2003/0159058 A1 discloses a method in which when an active data copy process relative to a logical storage device is performed without involving a computer, an access permission/rejection of the computer to the logical storage device is checked by referring to a correspondence between WWN of the computer and a logical storage device identifier LUN to thereby determine whether an access to a copy source logical storage device and a copy destination logical storage device is permitted or not.

US 2003/0229764 A1 discloses a method for copy information from a first storage subsystem to a second storage subsystem. The first and second storage subsystems are provided in a data storage system. The method comprises transmitting first data block from the first storage subsystem to the second storage subsystem, the first storage subsystem being associated with a first host computer and the second storage subsystem being associated with a second host computer; and transmitting first attribute information from the first storage subsystem to the second storage subsystem without intervention from the first host computer.

Therefore, an aim of the present invention is to provide a storage system and a computer system that allow copy data to be protected in the same manner as source data.

A further aim of the present invention is to provide a storage system and computer system capable of achieving at least one of (1) and (2) below:
(1) improving the reliability of the copy data; and
(2) sparing the storage capacity.

Further aims of the present invention will become apparent from the following description.

The storage system according to a first aspect of the present invention is a storage system capable of communicating with one or more host devices that issue a host input/output request, comprising two or more physical devices (a hard disk, DVD-R or R/W optical disk, or magnetic tape, for example), one or more logical devices provided in the two or more physical devices;
one or more memories that store one or more security information items corresponding with the one or more logical devices (information for controlling access based on a host input/output request); and a control device that controls access by the host device to the logical device selected from among the one or more logical devices on the basis of security information registered in the one or more memories. When data in a first logical device is written in a second logical device, the control device executes a process to associate, with the second logical device, security information of the same content as the security information corresponding with the first logical device, and write this security information in the one or more memories. At least one of the first logical device and second logical device is included in the one or more logical devices.

In the storage system according to the first aspect of the present invention, the storage system is connected with an external storage system. In a case where at least one of the vendor, manufacturer, machine type or processor OS of the storage system and the external storage system are the same, the control device associates, with the second logical device, security information of the same content as the security information corresponding with the first logical device, and writes this security information in the one or more memories before data in the first logical device is written in the second logical device; and, (1) when the first logical device exists in the storage system and the second logical device exists in the external storage system, the control device sends data in the first logical device, and information relating to this data, to the external storage system; and (2) when the second logical device exists in the storage system and the first logical device exists in the external storage system, the control device recognizes an input/output request received from the external storage system as an input/output request that is different from the host input/output request and writes data from the external storage system to the second storage device irrespective of the content of the security information associated with the second logical device.

In an embodiment of the storage system according to the first aspect of the present invention, the control device executes a process to acquire data in the first logical device and data written to the second logical device and compare both sets of acquired data.

In another embodiment of the storage system according to the first aspect of the present invention, when data in the first logical device and data written to the second logical device are compared, the control device erases data in the second logical device if data conformance is not obtained.

In another embodiment of the storage system according to the first aspect of the present invention, when data in the first logical device and data written to the second logical device are compared, the control device erases data in the first logical device if data conformance is obtained.

A computer system according to a second aspect of the present invention is provided in claim 5.

In the case of the computer system of the above aspect, a host that is connected to at least one of the plurality of storage systems or at least one storage system comprises means that read and collate data in a first device, which is a reading source, and data in a second device, which is a write destination. Further, if data conformance is not obtained as a result of this collation, the host or at least one storage system may erase the data in the second logical device, but if data conformance is obtained as a result of this collation, the data in the first logical device may be erased.

The method according to a third aspect of the present invention is provided in claim 6. In the drawings:
Fig. 1 is a block diagram showing a system configuration of a computer system to which a storage system according to an embodiment of the invention is applied;
Fig. 2 is a block diagram showing the usual relationship between physical devices (HDD units) 16-1 through 16-N and logical devices in a HDD subsystem 10;
Fig. 3 is a diagram explaining types of access attribute modes which are set for the respective logical devices in the HDD subsystem 10;
Fig. 4 is a diagram indicating the procedure for operation control of the logical devices for which 6 types of access attribute modes are respectively set;
Fig. 5 is a diagram showing an example of an access attribute control table 201 to keep the settings of the access attribute modes for the respective logical devices;
Fig. 6 is a diagram showing corresponding relationships between the 6 types of access attribute modes shown in Figs. 3 and 4 and the bit patterns of the access attribute mode information shown in Fig. 5;
Fig. 7 is a flowchart showing the flow of a process performed on the HDD subsystem 10 when operations such as setting, changing, and canceling of access attribute modes are performed;
Fig. 8 is a block diagram explaining host groups;
Fig. 9 is a diagram showing an example of a host group number calculation table;
Fig. 10 is a diagram showing an example of a host group information table;
Fig. 11 is a flowchart showing the flow of the main process of a command which is input by a host, wherein the main process is performed by a channel controller of the HDD subsystem 10;
Fig. 12 is a diagram showing an example of a command process list;
Fig. 13 is a flowchart showing a more detailed flow in performing each process in step S14 (extraction process execution) in the main process in Fig. 11;
Fig. 14 is a diagram showing an example of a mode-dependent process list;
Fig. 15 is a diagram showing an example of a mode-dependent error list;
Fig. 16 is a flowchart showing the flow of a process in performing a copy pair forming operation for duplicating a logical device in the HDD subsystem 10;
Fig. 17 is an example of the configuration of a computer system relating to the principal parts of this embodiment;
Fig. 18 shows a first example of a first copy process performed in this embodiment;
Fig. 19 shows a second example of a first copy process performed in this embodiment;
Fig. 20 shows an example of a host group information table;
Fig. 21 shows the flow of a process performed when security information and an S-vol permission password are set for the second LDEV 501B, in the second copy process;
Fig. 22 shows an example of a third copy process performed in this embodiment;
Fig. 23 is a diagram serving to illustrate the method of obtaining security information suited to the first storage system based on security information received from the second storage system 10A or 10B;
Fig. 24 shows an example of a fourth copy process performed in this embodiment;
Fig. 25 shows the flow of a process that is performed in a case where security information and an S-vol permission password are set for the internal LDEV 501B, in the fourth copy process;
Fig. 26 shows an example of a fifth copy process that is performed in this embodiment;
Fig. 27 shows an example of the flow of a process for checking whether data copied to the second LDEV 501B is corrupted;
Fig. 28 shows an example of the flow of a data erasure process based on the results of a data security check process;
Fig. 29 shows the flow of a process that is performed in a first modified example of this embodiment;
Fig. 30 shows the flow of a process that is performed in a second modified example of this embodiment; and
Fig. 31 shows an outline of the first to fifth copy processes.

An embodiment of the present invention will be described hereinbelow with reference to the drawings.

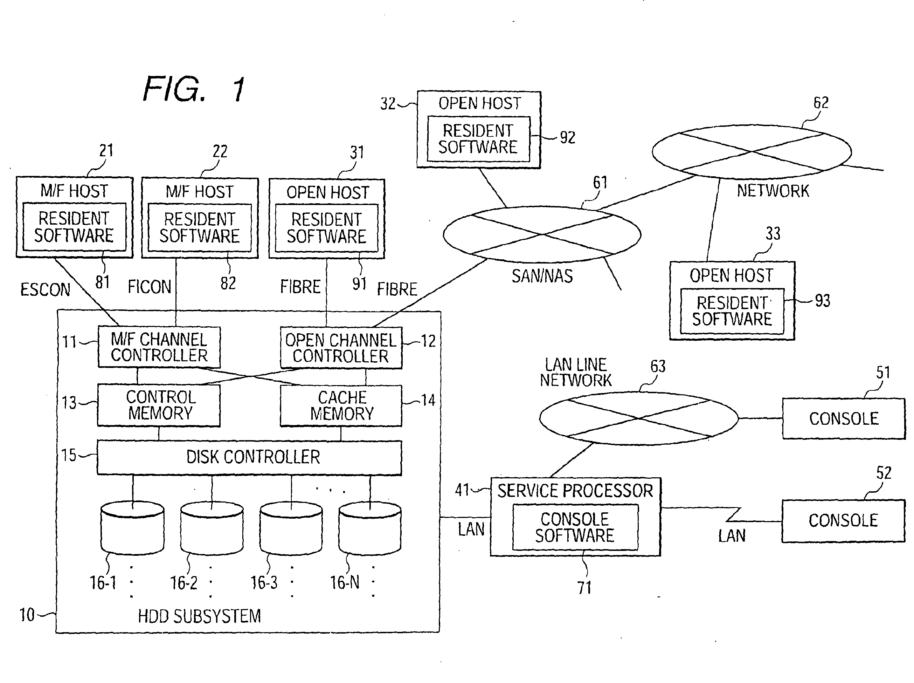

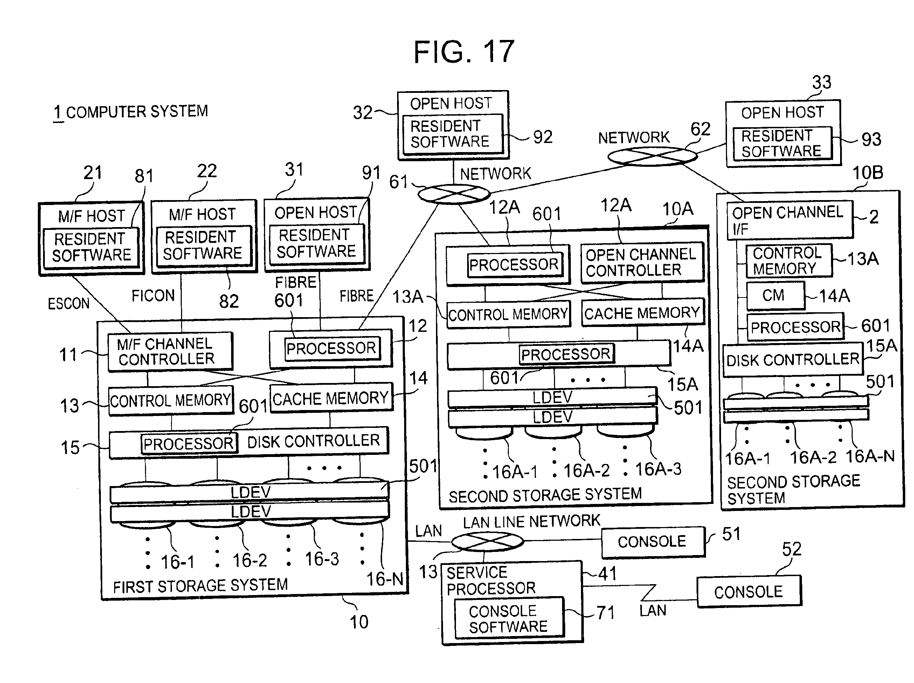

First, the premise behind this embodiment will be described with reference to Figs. 1 to 16 and then the principal parts of the embodiment will be described with reference to Fig. 17 and subsequent drawings.

Fig. 1 shows a system configuration of a computer system to which a storage system according to an embodiment of the invention is applied.

As shown in Fig. 1, a hard disk (HDD) subsystem (RAID system) 10 constituting a first embodiment of the present invention comprises a plurality of channel controllers 11 and 12 for controlling communications with a variety of hosts. Among this plurality of channel controllers, a mainframe (M/F) channel controller 11 is a proprietary system channel controller that is connected to one or more mainframe (M/F) hosts 21, 22 from a specified vendor with a specified OS via an M/F interface such as ESCON, FISCON, or the like, for example. Further, the open channel controller 12 is an open system channel controller that is connected to a variety of hosts (open hosts) 31, 32, 33 with different specifications such as the vendor or OS constituting the open system via networks 61 and 62 such as a dedicated line or SAN or the like through the medium of an interface such as a FIBRE interface.

This HDD subsystem 10 provides one or a plurality of logical devices (storage device logical units) for the hosts 21, 22, and 31 to 33 connected to the channel controllers 11 and 12.

In addition to the channel controllers 11 and 12 mentioned above, the HDD subsystem 10 contains a control memory 13, a cache memory 14, a disk controller 15, and a plurality of HDD units 16-1 to 16-N, which are physical devices. The disk controller 15 controls the data read/write operations with respect to the HDD units 16-1 to 16-N. The control memory 13 and cache memory 14 are accessed by both the channel controllers 11 and 12 and the disk controller 15. The control memory 13 is used to store a variety of control information required for access control of each logical device and for controlling other operations. The cache memory 14 is used to temporarily hold data that is to be the target of a read/write process.

Furthermore, the HDD subsystem 10 is connected to a service processor 41 via a LAN, for example (an internal LAN for operation control of the HDD subsystem 10, which is connected to the channel controllers 11 and 12, the disk controller 15, and so forth, of the HDD subsystem 10). Console software 71, which has a function for management control such as the setting of access attribute modes as well as the setting of other functions of each logical device for the HDD subsystem 10 is installed on the service processor 41. The service processor 41 is also connected with one or more console terminals 51 and 52 via a LAN or another network 63, for example. Further, the console software 71 of the service processor 41 functions as a WEB server for the console terminals 51 and 52, whereby the above management control of the HDD subsystem 10 can be performed in response to requests from each of the console terminals 51 and 52.

In addition, storage management software 81 and 82, which is resident software compatible with the OS of the M/F hosts 21 and 22, is installed on the M/F hosts 21 and 22. Also installed on the open hosts 31, 32 and 33 is storage management software 91, 92 and 93, which is resident software compatible with the respective different OS of the open hosts 31, 32, and 33. All of the storage management software 81, 82, and 91 to 93 have functions for storage management control such as the setting of access attribute modes, as well as the setting, control, and so forth, of other functions and operations of each logical device for the HDD subsystem 10 in response to instructions from an application program (not shown) for using the HDD subsystem 10, this application program being installed on the respective hosts. Therefore, each of the M/F hosts 21 and 22 and open hosts 31, 32, and 33 is able to automatically perform varied management control for the HDD subsystem 10 from the application program (not shown) installed on the M/F hosts 21 and 22 and open hosts 31, 32, and 33 through the medium of the storage management software 81, 82, and 91, 92, and 93.

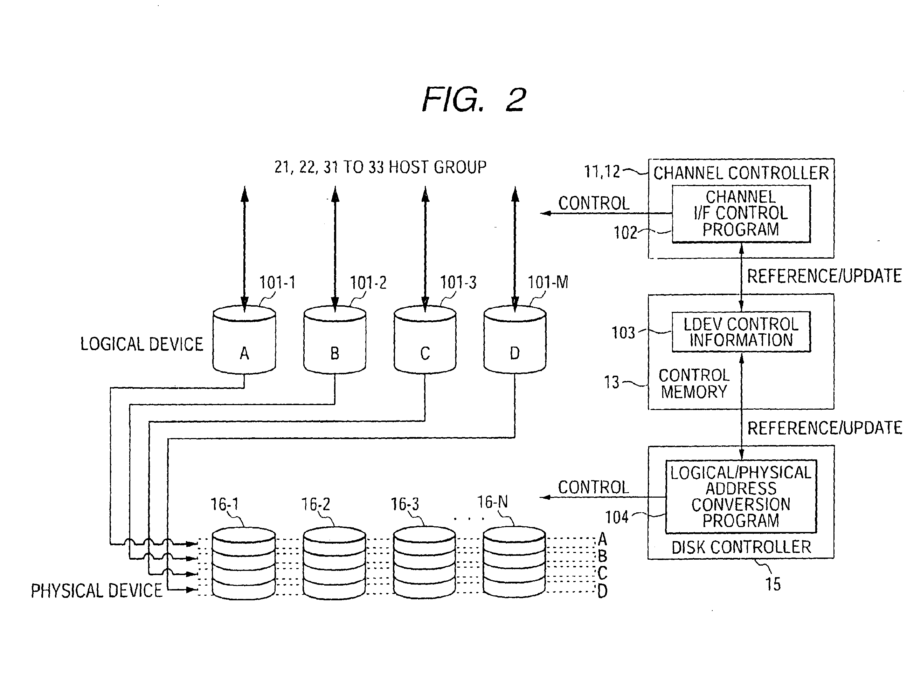

Fig. 2 shows the usual relationship between the physical devices (HDD units) 16-1 through 16-N and the logical devices in the HDD subsystem 10.

As shown in Fig. 2, generally speaking, each of the plurality of logical devices 101-1 to 101-M is created by using partial storage areas spanning the plurality of the physical devices (PDEV) 16-1 to 16-N. The control memory 13 stores logical device (LDEV) control information 103, which is a collection of varied information for LDEV control of the access attribute modes and so forth of the logical devices (LDEV) 101-1 to 101-M. A channel interface (channel I/F) control program 102 installed on the channel controllers 11 and 12 calculates the addresses (LDEV addresses) of logical devices (LDEV) targeted for access from information for LDEV access that is supplied by a host, and determines the details of operations pertaining to the access target by referencing the LDEV control information 103 in the control memory 13. A logical/physical address conversion program 104 installed on the disk controller 15 performs address conversion between an LDEV address and a PDEV address (physical device address) by means of computation to determine the LDEV and PDEV addresses of the access target, and determines the details of the operation pertaining to the access target by referencing the LDEV control information 103 of the control memory 13.

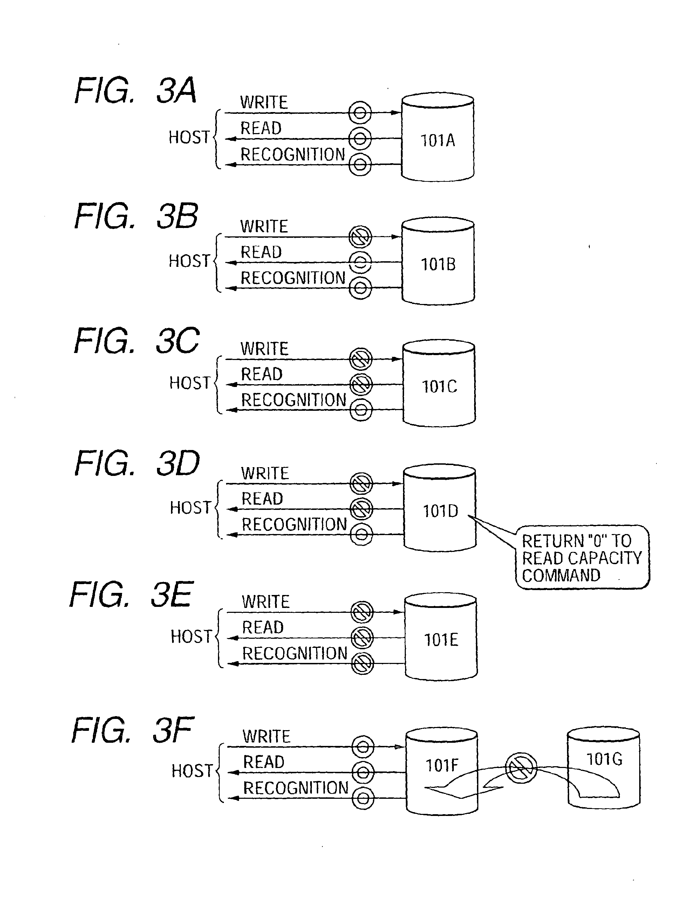

Fig. 3 illustrates types of access attribute modes that are set for each logical device in the HDD subsystem 10. The six types of access attribute modes shown in (1) to (6) below can be set for each logical device.

### (1) Readable/Writable

As shown in Fig. 3A, a host can write and read data to and from a logical device 101A for which this access attribute mode has been set, and are able to recognize this logical device 101.

### (2) Read Only

As shown in Fig. 3B, a host can read data from a logical device 101B for which this access attribute mode has been set, and is able to recognize this logical device 101. However, the writing of data is denied.

### (3) Unreadable/Unwritable

As shown in Fig. 3C, a host is denied permission to write or read data to or from a logical device 101C for which this access attribute mode has been set, but is able to recognize this logical device 101.

### (4) Read Capacity 0

As shown in Fig. 3D, a host is able to recognize a logical device 101D for which this access attribute mode has been set. However, in the event of a Read Capacity command (a command inquiring after the storage capacity of this logical device) from a host, a response to the effect that the storage capacity is ' 0' is returned to the host. Therefore, neither the reading nor writing of data from/to this logical device 101D is permitted.

### (5) Restricted inquiry

As shown in Fig. 3E, hosts are unable to recognize a logical device 101E for which this access attribute mode has been set. That is, in the event of an inquiry for recognition of a logical device from a host, a response to the effect that this logical device 101E does not exist is returned to the host. Therefore, access by a host for the reading and writing of data to and from this logical device 101E, and for [a determination of] the read capacity, and the like, is not permitted. However, in a copy pairing formation operation performed by the HDD subsystem 10 as an internal function, the HDD subsystem 10 can designate the logical device 101E as a secondary volume (S-vol designation) for another logical device.

### (6) Secondary Volume Disable (S-vol disable)

As shown in Fig. 3F, an operation to designate a logical device 101F, for which this access attribute mode has been set, as a secondary volume of another logical device 101G (copy destination for data of the other logical device 101G), for duplication of the other logical device 101G (that is, the designation of the logical device 101F as a secondary volume in a copy pairing operation (S-vol designation), is denied). However, data reading and writing, and recognition for this logical device 101E are permitted.

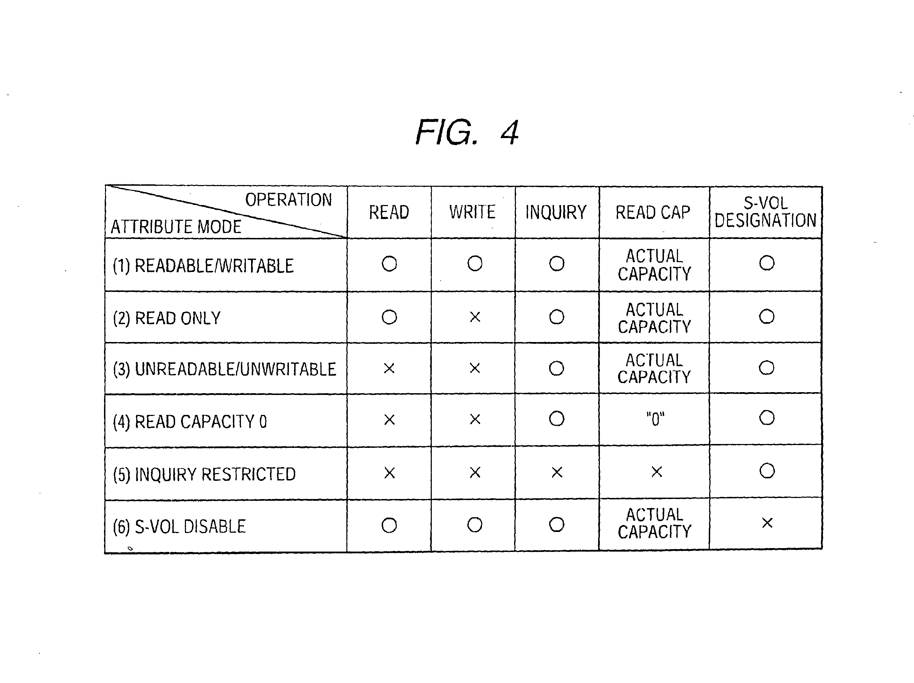

Fig. 4 is a diagram indicating the procedure performed by the HDD subsystem 10 for operation control of the logical devices for which 6 types of access attribute modes are respectively set. In Fig. 4, the circle symbol indicates that access control enabling a corresponding operation is performed and the cross symbol indicates that access control to disable a corresponding operation is performed. In the case of 'Actual capacity' and "'0"', which relate to the Read Capacity, the content of a response to a host in the event of a Read Capacity command from a host indicates whether the capacity is the actual capacity of the logical device or the capacity '0' respectively.

Of the six types of access attribute mode above, Readable/Writable, Read Only, Unreadable/Unwritable, and S-vol disable can also be applied to logical devices used by any of the M/F hosts and open hosts. On the other hand, although, according to this embodiment, Read Capacity 0 and Restricted inquiry are applied to only logical devices used by open hosts and are not applied to logical devices used by M/F hosts, this does not preclude other applications.

Of the six types of access attribute mode above, any one mode selected from among Readable/Writable, Read Only, Unreadable/Unwritable, Read Capacity 0 and Restricted inquiry can be set for one logical device. On the other hand, S-vol disable can be set for the same logical device independently (that is in parallel with) the other five types of access attribute mode. For example, Readable/Writable and S-vol disable are set for the same single logical device.

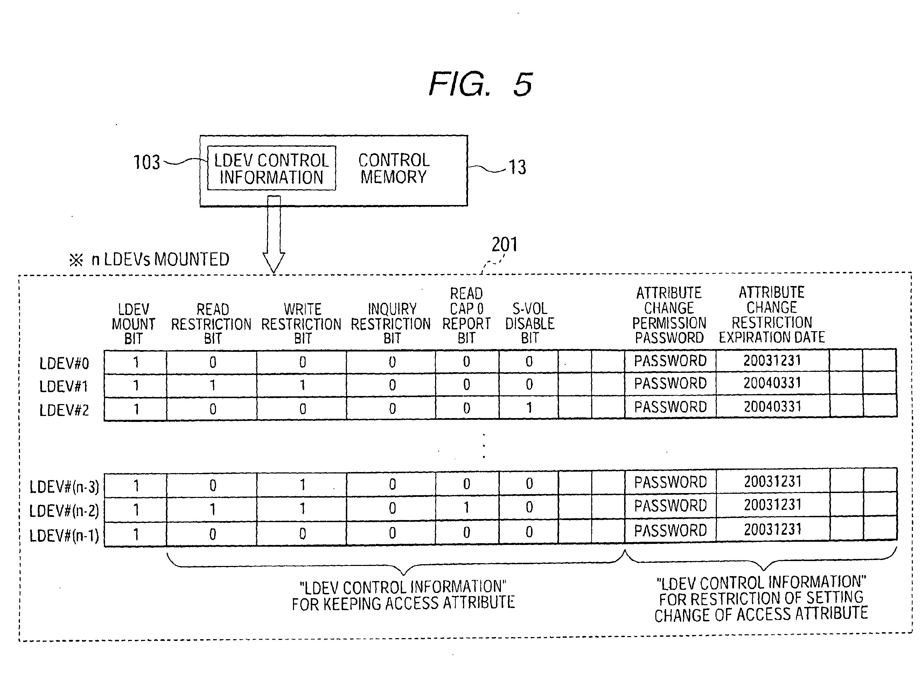

Fig. 5 is a diagram showing an example of an access attribute control table 201 to keep the settings of the access attribute modes for the respective logical devices (LDEV).

As shown in Fig. 5, the access attribute control table 201 is included in LDEV control information 103 stored in the control memory 13. The access attribute control table 201 functions both as means for keeping the access attribute modes that have been set for each logical device and as means for restricting any changes to the settings of access attribute modes by an unauthorized body. The access attribute control table 201 is secured in a quantity equal to the number of installed logical devices and includes the following attribute control information for each logical device.

The access attribute control table 201 has LDEV mounting bits as information indicating whether corresponding logical devices (LDEV) are substantially mounted for each of the identification numbers (LDEV numbers: LDEV#0, LDEV#1,..., LDEV# (n-1), and so forth in the example shown) of the logical devices (LDEV). If a LDEV mounting bit is '1', this indicates that the logical device (LDEV) is substantially mounted.

In addition, as information (access attribute mode information) for keeping access attribute modes that are set for corresponding logical devices (LDEV) for each LDEV number, the access attribute control table 201 includes Read restriction bits, Write restriction bits, Restricted inquiry bits, Read Capacity 0 report bits, and S-vol Disable bits. A Read restriction bit signifies that data reading from a corresponding logical device is denied if this Read restriction bit is 1' , and that data reading is possible if the Read restriction bit is '0'. A Write restriction bit signifies that data writing to a corresponding logical device is denied if this Write restriction bit is '1', and that data writing is possible if the Write restriction bit is '0'. A restricted inquiry bit signifies that recognition of a corresponding logical device is denied if this Restricted inquiry bit is '1', and that recognition is possible if the Restricted inquiry bit is '0'. If the Read Capacity 0 report bit is '1', the Read Capacity 0 report bit indicates that a zero capacity is reported in response to a Read Capacity command for a corresponding logical device, and, if the Read Capacity 0 report bit is '0', same indicates that an actual capacity is reported. If an S-vol Disable bit is '1', same indicates that an S-vol designation for a corresponding logical device is denied, and if the S-vol Disable bit is '0', same indicates that an S-vol designation is possible.

In addition, the access attribute control table 201 includes, for each LDEV number, attribute change permission passwords and attribute change restriction deadlines (the year, month, day, hour, minutes, and seconds) as information serving to restrict any changes to the settings of access attribute modes of corresponding logical devices (LDEV). An attribute change permission password is a password that is preset for each LDEV number in order to authenticate a person who has privileges permitting changes to the settings of the access attribute mode of a corresponding device. An attribute change restriction deadline signifies that any changes to the settings of the access attribute modes of a corresponding logical device is denied until this deadline is reached, these deadlines being set all together when the current access attribute modes are set.

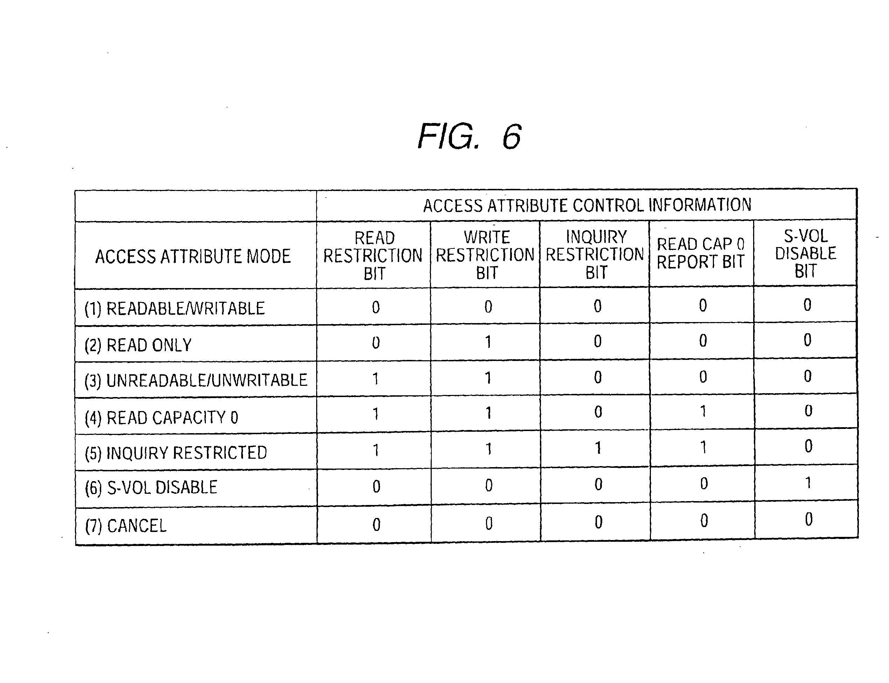

Fig. 6 shows the relationships between the six types of access attribute modes shown in Figs. 3 and 4, and the bit patterns of the access attribute mode information (Read restriction bits, Write restriction bits, Restricted inquiry bits, Read Capacity 0 report bits, and S-vol Disable bits) shown in Fig. 5.

In the access attribute control table 201 shown in Fig. 5, because access attribute mode information is set using the bit patterns shown in Fig. 6, the six types of access attribute mode mentioned above are set respectively (or the mode setting thereof is cancelled).

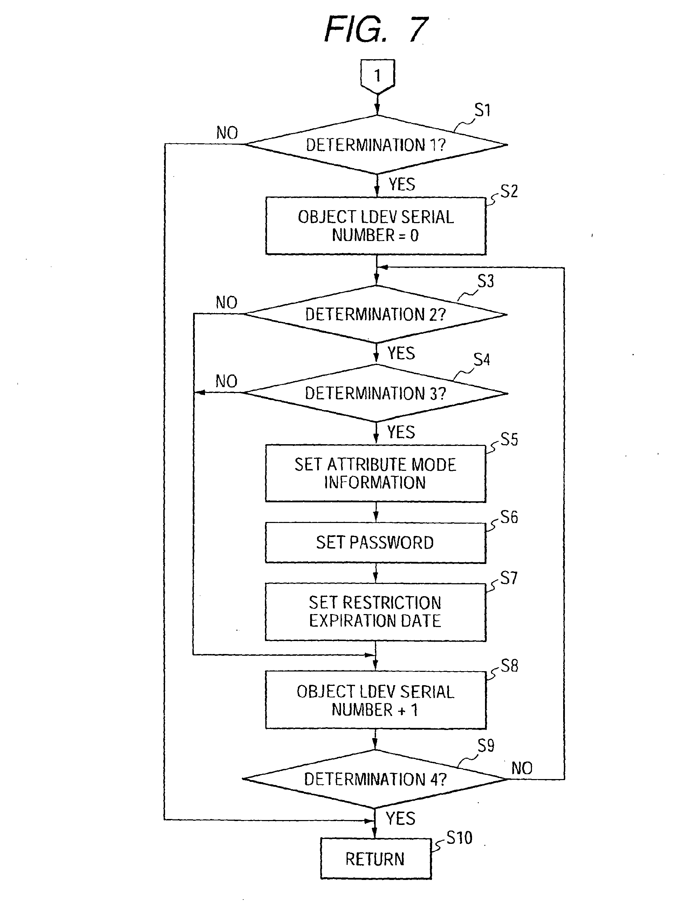

Fig. 7 is a flowchart showing the flow of a process performed on the HDD subsystem 10 when the above operations such as setting, changing, and canceling of access attribute modes are performed.

An instruction for an access attribute mode operation with respect to the HDD subsystem 10 (setting/change/cancellation) can be issued via the console terminals 51 and 52 shown in Fig. 1 via the console software 71 of the service processor 41 by way of an internal LAN for operation control (instruction from out-of-band), or can be performed via the storage management software 81, 82, and 91 to 93 of the hosts 21, 22, and 31 to 33 through a data band (instruction from in-band). The process shown in Fig. 7 is performed by the channel controllers 11 and 12 when the instruction is received from in-band, and is performed by the channel controllers 11, 12 and the disk controller 15 when the instruction is received from in-band.

An instruction for an access attribute mode operation which is input to the HDD subsystem 10 from an external device such as the service processor 41 (the console terminal 51, 52) or the hosts 21, 22, and 31 to 33, and so forth, includes the following information (1) and (2).
(1) the quantity of operation-target logical devices (quantity of operation target LDEV)
(2) the following items (a) to (d) for each operation-target logical device:
   (a) the identification numbers of the operation-target logical devices (the operation-target LDEV number)
   (b) the access attribute mode information to be manipulated (Read restriction bit, Write restriction bit, Restricted inquiry bit, Read Capacity 0 Report bit, or S-vol Disable bit)
   (c) an attribute change permission password
   (d) an attribute change restriction deadline. Here, the relationship between the access attribute mode information to be manipulated and the access attribute modes to be set is as shown in Fig. 6. Further, in the case of an operation on a logical device for which an access attribute mode has already been set, if the attribute change permission password does not match the set password, the operation yields an error.

When the above operation instruction is inputted by an external device, the process shown in Fig. 7 is performed within the HDD subsystem 10. The sequence may be described in sequence as follows:
(1) Step S1: Judgment 1 : a check of the whole attribute change operation
   This step involves checking conditions such as:
   (a) whether the quantity of operation-target LDEV is equal to or less than a prescribed number;
   (b) in a case where an operation-target logic device can be operated by a plurality of controllers and exclusive control is required, whether the lock of the logical device has been obtained;
   (c) in a case where it is necessary to acquire a license to change attributes, whether a host that has issued an instruction (host software) has a license to set attributes. If problems arise as a result of this check, it is judged that an error has occurred, and, in the absence of any problems, the control moves on to step S2.
(2) Step S2: the initial value setting of a target LDEV serial number
   Here, an initial value '0' is set for the serial number (target LDEV serial number) of the operation-target logical device, and then control moves on to step S3.
(3) Step S3: Judgment 2: check of target LDEV unit
   This step involves checking, for the operation-target logical device, conditions such as:
   (a) whether the operation-target LDEV number is valid;
   (b) whether the bit pattern of manipulated access attribute mode information is valid (for example, for logical devices used by open hosts, bit patterns corresponding to any of the attribute modes (1) to (7) shown in Fig. 6 are valid, whereas for logical devices used by M/F hosts, bit patterns corresponding to any of the attribute modes (1) to (3) and (6) to (7) shown in Fig. 6 are valid);
   (c) whether the logical device is mounted and normal;
   (d) whether the logical device attributes may be manipulated (for example, due to the relationship with another function or operation performed by the HDD subsystem 10, there can be cases where attribute manipulation is denied). If problems arise as a result of this check, it is judged that an error has occurred, and control moves on to step S8, and, in the absence of any problems, control moves on to step S4.
(4) Step S4: Judgment 3: check on attribute setting restriction
   This step involves checking, for the operation-target logical device, conditions such as:
   (a) in a case where an attribute change permission password has already been registered, whether this password matches the inputted attribute change permission password; and
   (b) in a case where an attribute change restriction deadline has already been registered, whether the deadline has passed. If problems arise as a result of this check, the control moves on to step S8, and, in the absence of any problems, the control moves on to steps S5 to S7.
(5) Steps S5 to S7: registration of settings for the access attribute control table 201
   Here, access attribute mode information (Read restriction bit, Write restriction bit, Restricted inquiry bit, Read Capacity 0 report bit, and S-vol Disable bit) for the operation object logical device, an attribute change permission password, and an attribute change restriction deadline are registered in the access attribute control table 201 shown in Fig. 5 with settings according to the inputted operation instructions. However, the registration of settings for an attribute change permission password is performed only when an attribute change permission password is not yet registered and when an attribute change permission password is included in an inputted operation instruction. Further, the registration of settings for an attribute change restriction deadline is performed only when an attribute change restriction deadline is included in the inputted operation instruction. Thereafter, the control moves on to step S8.
(6) Step S8: increment of operation-target LDEV serial numbers
   The target-LDEV serial number is incremented by one, and the control moves on to step S9.
(7) Step S9: Judgment 4: termination judgment
   This step involves checking whether the target LDEV number has reached the quantity of the operation-target LDEV. As a result, if this quantity has not been reached, the control moves on to step S3, whereupon access attribute mode operation for the next operation-target logical device is performed. If this quantity has been reached, the access attribute mode operation is terminated. In the event of an error in an access attribute mode operation of any of the operation-target logical devices, a response to be returned to an external device (a service processor (console terminal) or a host) includes information on the cause of the error with the attribute mode operation for each logical device exhibiting the error.

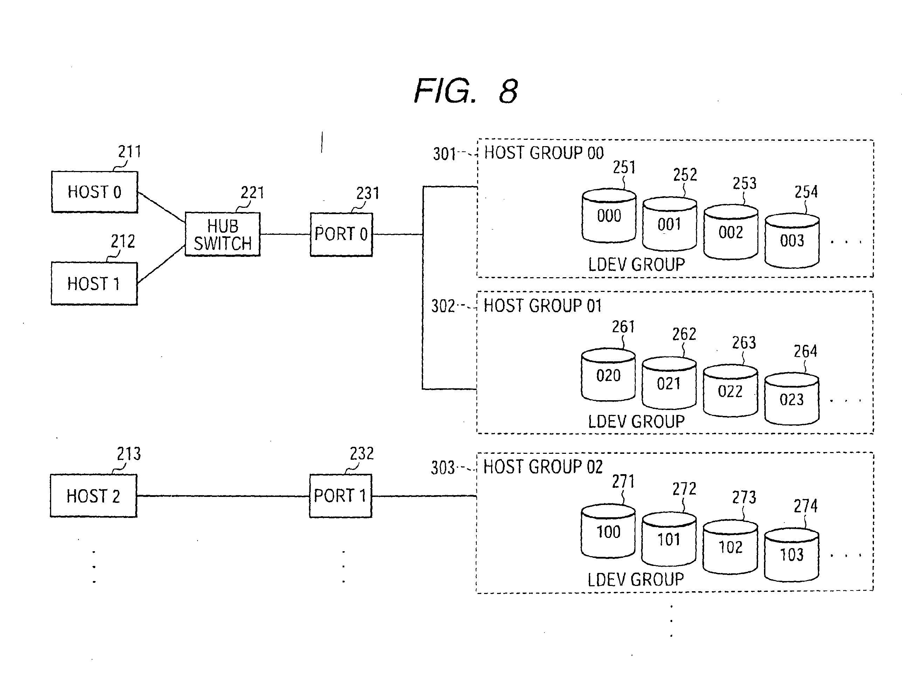

Figs. 8 to 10 illustrate the method of the HDD subsystem 10 for changing an operation or response to a command from a host in accordance with the host vendor, OS, version, or the like. Although this method is more particularly applied to open hosts whose respective vendors, OS or versions can be different, it may also be applied to all hosts, including M/F hosts in addition to open hosts.

Figs. 8 to 10 illustrate 'host groups' and 'host modes'.

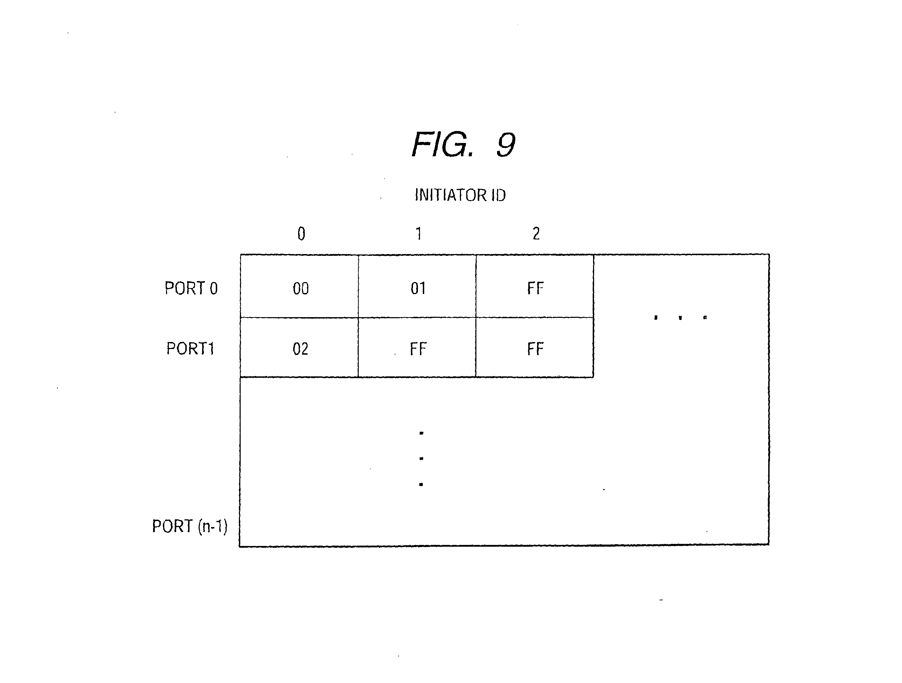

As shown in Fig. 8, one or a plurality of host groups 301, 302, and 303 can be defined for each of the plurality of channel ports 231 and 232 of the host interfaces of the channel controllers (particularly the open channel controller 12 shown in Fig. 1) in the HDD subsystem 10. One or a plurality of logical devices 251 to 254, 261 to 264, and 271 to 274 can be defined under each of the host groups 301, 302, and 303. The identification numbers of the host groups 301, 302, and 303 (host group numbers) can be calculated from the port numbers and initiator IDs (host identification numbers) in host commands. For example, a host group number calculation table, as shown in Fig. 9 by way of example, is pre-stored in the HDD subsystem 10 (for example, in the control memory 13), and the channel controllers, for example, determine the host group numbers from the port numbers and the initiator IDs, on the basis of this host group number calculation table. In the example shown in Figs. 8 and 9, the host group number that corresponds to port number 0' and initiator ID '0', for example, is '00', and logical devices 251 to 254 are allocated under the host group 301 of this number '00'. That is, the host 211 with number '0' shown in Fig. 8 belongs to the host group 301 with number '00', the logical devices 251 to 254 being allocated thereto. Likewise, the host 212 with number '1' belongs to the host group 302 with number '01' , the logical devices 261 to 264 being allocated thereto, and the host 213 with number 2' belongs to the host group 303 with number '02' , the logical devices 271 to 274 being allocated thereto.

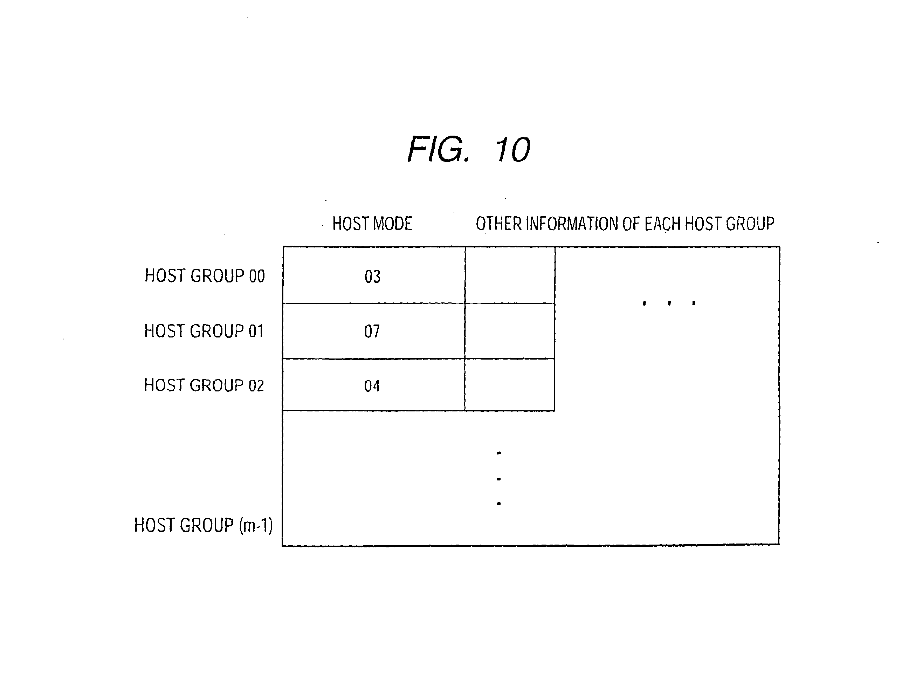

One piece of information that is set for each host group is the 'host mode'. The 'host mode' is a host type corresponding to the host vendor, OS, version, or the like, and the operations or responses of the HDD subsystem 10 to commands from the host change according to the host mode of the host. A host mode is set as described below, for example. That is, a host group information table, as shown in Fig. 10 by way of example, for the registration of information on the settings for each host group is stored in the HDD subsystem 10 (for example, in the control memory 13), and then the host mode of each host group is set and registered in the host group information table by the channel controllers, for example. In the example shown in Fig. 10, a number '03' host mode is set for the host group with number '00', a number '07' host mode is set for the host group with number '01', and a number '04' host mode is set for the host group with number '02'. In such a manner, host mode numbers differ according to the host group, and hence the operations or responses of the HDD subsystem 10 to commands from a host vary depending on the host group to which the host belongs.

Further, other information which is set and registered in the host group information table shown in Fig. 10 by way of example includes, for example, host group numbers, the identification numbers of allocated logical devices, and so forth.

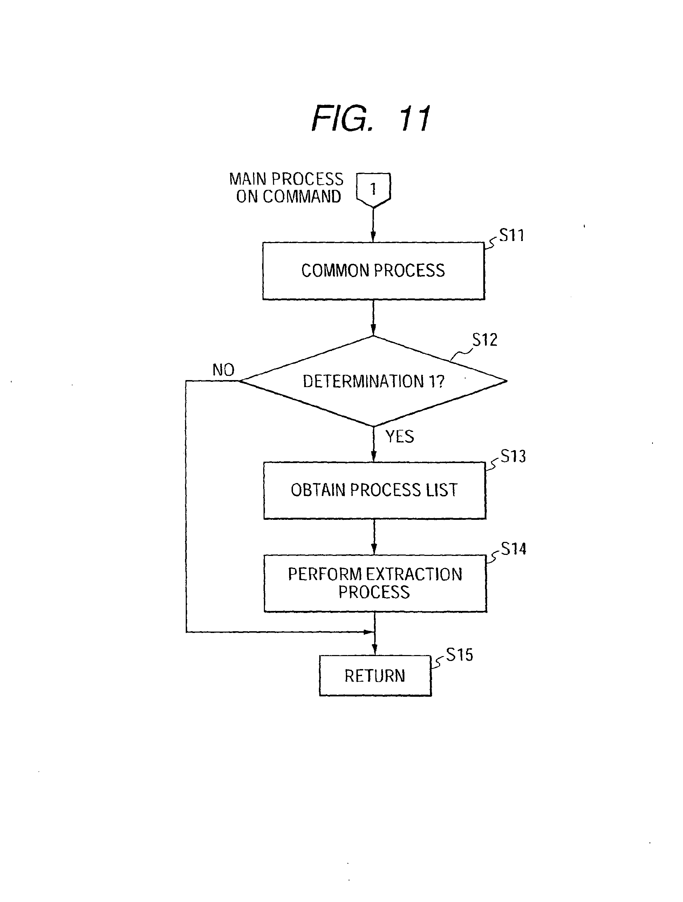

Fig. 11 shows the flow of a main process of a command from a host, this main process being performed by a channel controller of the HDD subsystem 10.

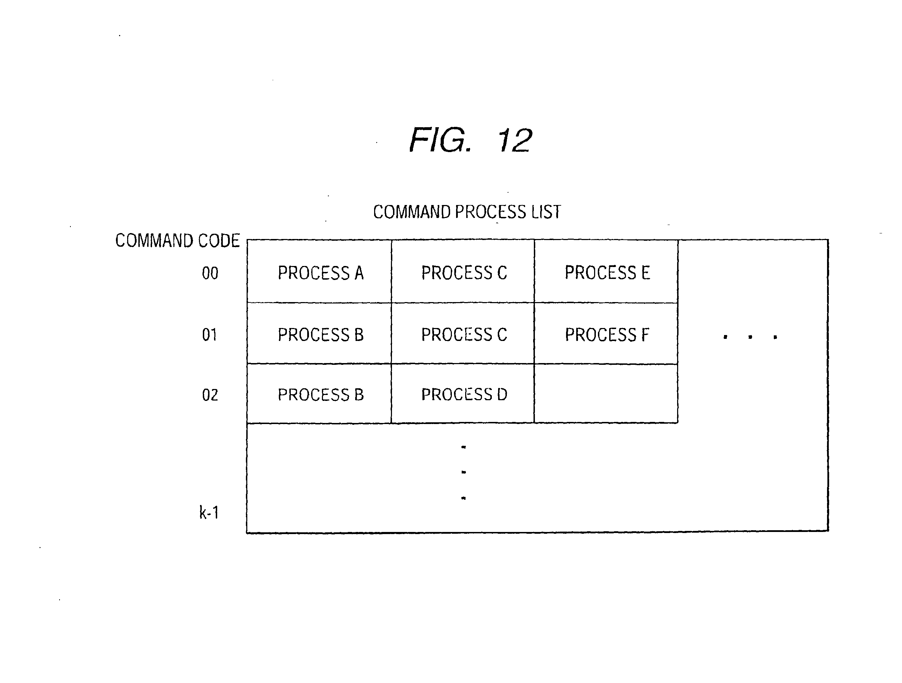

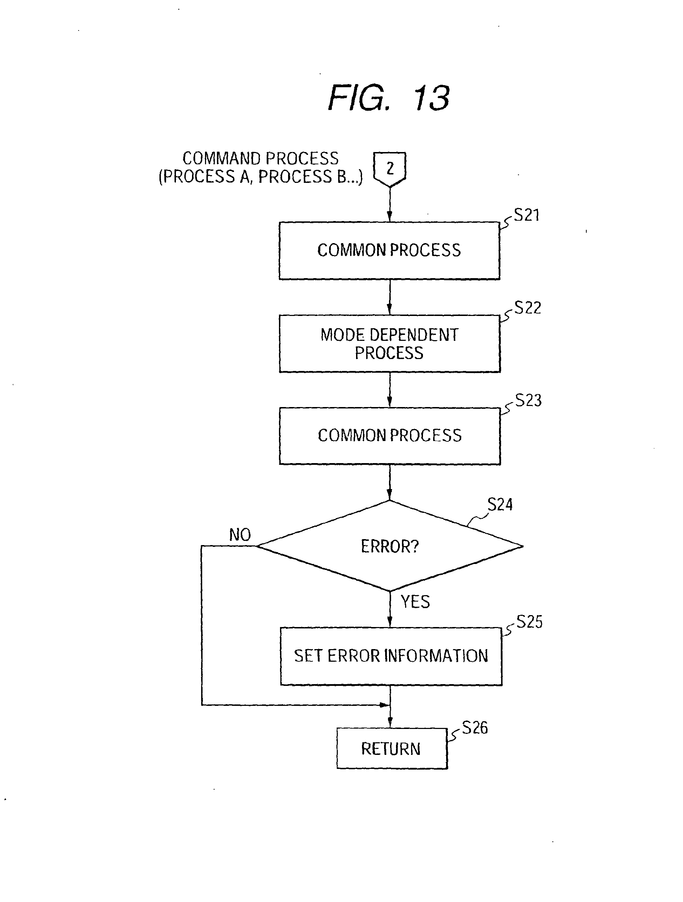

Upon receipt of a command from a host, a channel controller performs a process that is suited to the command classification in the flow shown in Fig. 11, and responds to the host. This process will be described below in sequence.
(1) Step S11 : Common process
   Here, a common process that is independent of the command classification is executed. This common process includes calculation of the identification number of the access-target logical device (LDEV number) from an initiator ID, target ID, LUN (logical unit) number, and the like which are included in the command from the host, and acquisition of control information on the configuration, usage state, failure state, access attribute mode information, and the like of the access-target logical device, from the LDEV control information 103 in the control memory 13.
(2) Step S12: Judgment 1
   This step involves checking, based on control information acquired from the LDEV control information 103 in the control memory 13, conditions of the access target logical device such as:
   (a) whether this logical device is mounted and normal;
   (b) whether this logical device is not in use;
   (c) whether there is no failure report for this logical device; and
   (d) whether the command code (command classification) of the command from the host does not require an access operation which is denied by the access attribute mode information on this logical device. If problems arise as a result of this check, processing of the command is rejected, and, in the absence of any problems, the control moves on to step S13.
(3) Step S13: acquisition of process list
   This step involves referencing a command process list (pre-stored in the control memory 13, for example), as shown in Fig. 12 by way of example, which lists processes to be executed for each command code (command classification). Processes corresponding with the command code (command classification) of a command from the host are then extracted from this command process list. According to the example shown in Fig. 13, if the command code is '00', for example, 'process A', 'process C', and 'process E' are extracted. Control then moves on to step S14.
(4) Step S14: Extraction process execution
   In this step, processes extracted from the command process list are each executed. For example, when the command code is '00', 'process A', 'process C' , and 'process E' are executed respectively. Here, if required, host mode branching is carried out. In cases where the host interface is according to the SCSI protocol Standard, for example, commands performing host mode branching are often control/sense/diag system commands. So too with security functions, host attribute recognition can be implemented by changing the response to the commands of a control/sense/diag system.
   A more detailed process flow of this step S14 will be described later with reference to Fig. 13. After step S14, control moves on to step S15.
(5) Step S15: Return
   The results of command processing are returned to the host.
   Fig. 13 is a flowchart showing a more detailed process flow when performing each process (for example, when the command code is '00', 'process A', 'process C', and 'process E' respectively) in step S14 (extraction process execution) in the main process in Fig. 11. This process flow is described below in sequence.

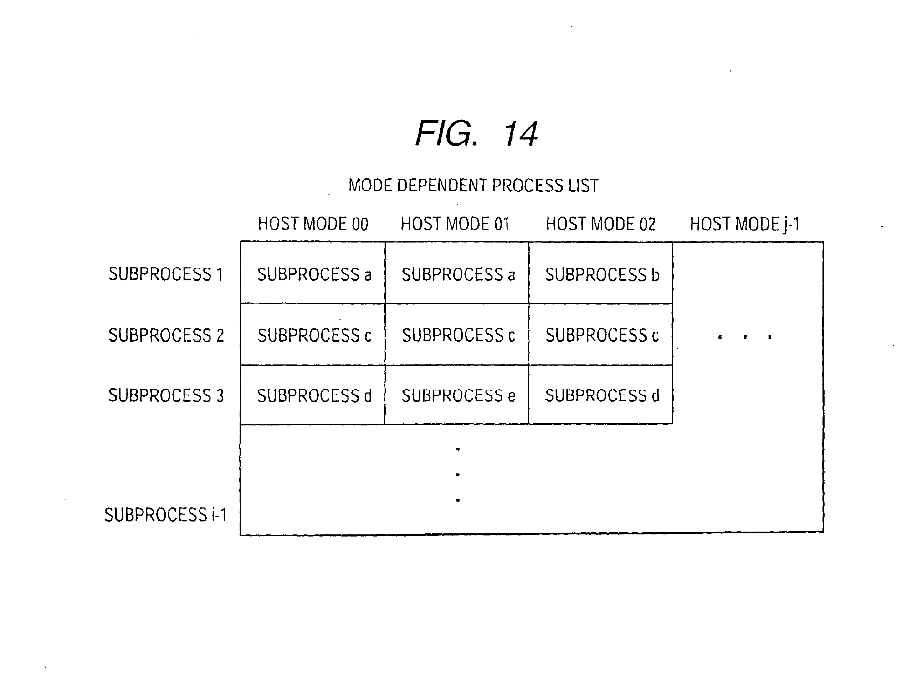

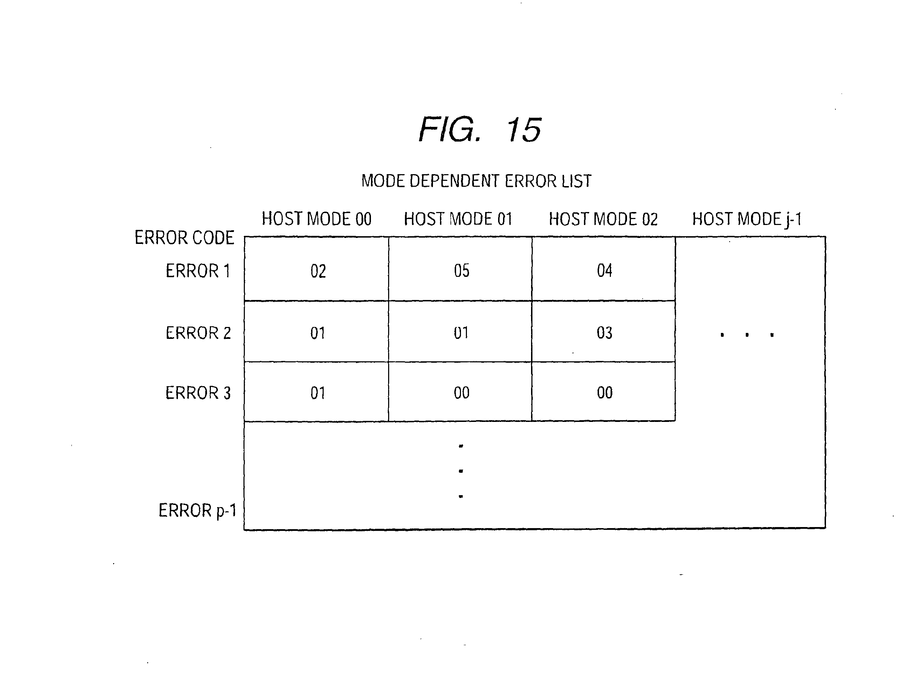

(1) Step S21: Common process
   A process to be performed (the abovementioned 'process A', for example) is divided into a plurality of subprocesses constituting the process. If these subprocesses include a subprocess (common process) that is independent of the host mode (that is, common to all the host modes) and which is to be performed before a subprocess that is dependent on the host mode (that is, a subprocess that changes according to the host mode), this subprocess is performed in this step S21. Thereafter, control moves on to step S22.
(2) Step S22: Mode-dependent process
   Here, if the above plurality of subprocesses includes a subprocess that is host-mode-dependent (a mode-dependent process), this subprocess is executed here. As an example of a specific method, first, the table shown in Figs. 9 and 10 by way of example is referenced, based on the initiator ID of the command, the port number, the access-target LDEV number, or the like, to determine the host mode of the host that issued the command. Subsequently, the mode-dependent process list (for example, pre-stored in the control memory 13), which is shown in Fig. 14 by way of example and lists host-mode subprocesses corresponding to mode-dependent processes is referenced, and a subprocess corresponding to the mode-dependent process corresponding to the host mode of the host is extracted from the mode-dependent process list. For example, when the mode-dependent process is 'subprocess 1', and the host mode is number '02', 'subprocess b' is extracted. The extracted subprocess corresponding to the host mode is executed.
   When there is a plurality of host-dependent processes, subprocesses corresponding to the host mode are selected by the above-described method for the plurality of host-dependent processes, and then the selected subprocesses are performed.
   Thereafter, control moves on to step S23.
(3) Step S23: Common process
   Here, if the plurality of subprocesses includes a subprocess that is a common process independent of the host mode and which is to be performed after a mode-dependent process, this subprocess is executed in this step. Thereafter, control moves on to step S24.
(4) Steps S24 and S25: Error response
   If the execution of steps S21 to S23 terminates normally, a response to that effect is returned to the host. On the other hand, in cases where an error arises in steps S21 to S23, when this error is host-mode-dependent (a mode-dependent error) (that is, the response content (error information) needs to be changed in accordance with the host mode), error information matching the host mode is created and then returned to the host. As an example of a specific method, a mode-dependent error list as shown in Fig. 15 (which is pre-stored in the control memory 13, for example), which lists host-mode error information that corresponds with the error codes (error classification) of the mode-dependent errors is referenced, and error information corresponding with the mode-dependent error matched to the host mode of the host is extracted from the mode-dependent error list so that the extracted error information is set for the response content for the host, which is to be returned to the host. For example, when the mode-dependent error is 'error 1' and the host mode is number '01', error information '05' is extracted and set to the response content before being returned to the host.

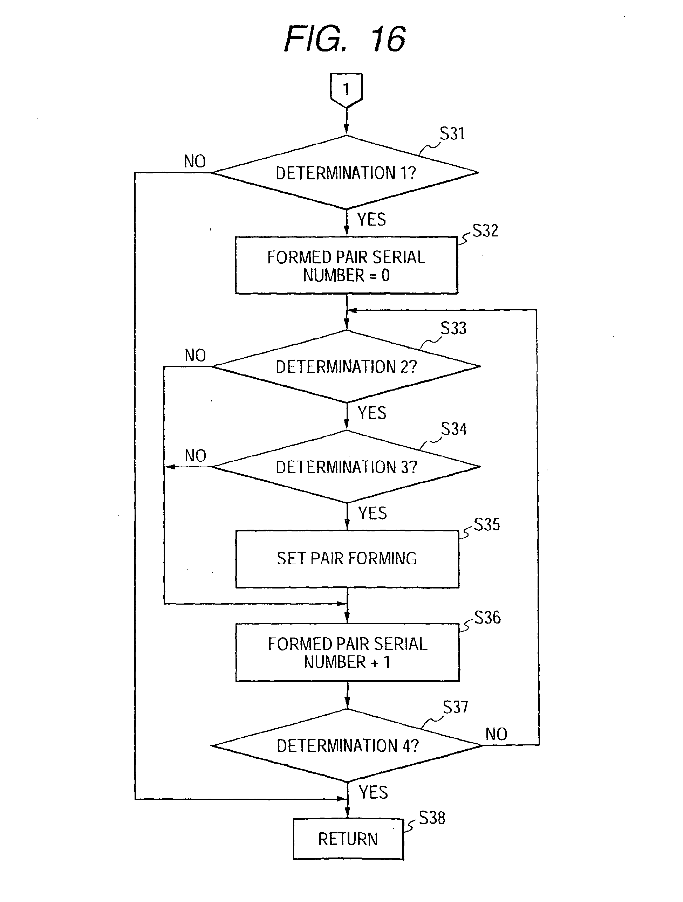

Fig. 16 shows the flow of a process when a copy pair forming operation for duplicating a logical device is performed, according to the HDD subsystem 10.

An instruction to the HDD subsystem 10 to form a copy pair can be issued by the console terminals 51 and 52 shown in Fig. 1 through the medium of the console software 71 of the service processor 41 and through an operation control internal LAN (instruction from out-of-band), or can be issued by the storage management software 81, 82, and 91 to 93 of the hosts 21, 22, and 31 to 33 through the data band (instruction from in-band). The process shown in Fig. 16 is performed by the channel controllers 11 and 12 when the instruction is received from in-band, and is performed by the channel controllers 11 and 12, and the disk controller 15 when the instruction is received from in-band.

An instruction to form copy pairs that is inputted to the HDD subsystem 10 by the service processor 41 (the console terminals 51, 52) or by external devices such as the hosts 21, 22, and 31 to 33 includes the following information (1) and (2):
(1) the quantity of copy pairs to be formed
(2) the following items (a) and (b) for each copy pair
   (a) the LDEV number of a logical device that is to become a P-vol (primary volume: copy source)
   (b) the LDEV number of a logical device that is to become an S-vol (secondary volume: copy destination)
      When the above operation instruction is inputted by an external device, the process shown in Fig. 16 is executed in the HDD subsystem 10. This process will be described below in sequence.

(1) Step S31: Judgment 1: A check of the whole pair-forming operation
   This step involves checking conditions such as:
   (a) whether the quantity of formation-target copy pairs is equal to or less than a prescribed number
   (b) in a case where the copy-pair forming operation is possible by means of a plurality of controllers and exclusive control is required, whether a lock has been acquired for a formation-target copy pair
   (c) in a case where it is necessary to acquire a license for the copy-pair forming operation, whether a host that has issued an instruction (host software) has a license to perform the copy pair forming operation.

   If problems arise as a result of this check, it is judged that an error has occurred, and, in the absence of any problems, the control moves on to step S32.
(2) Step S32: the initial value setting of a formation-target copy pair serial number
   Here, an initial value '0' is set for the serial number of the formation-target copy pair (formation-pair serial number), and then control moves on to step S33.
(3) Step S33: Judgment 2: P-vol check
   This step involves checking, for a logical device that is a P-vol-rendition operation target, conditions such as:
   (a) whether the LDEV number of the logical device is valid;
   (b) whether the logical device is mounted and normal
   (c) whether the logical device may be rendered a P-vol (for example, there can be cases where, due to the relationship with another function or operation performed by the HDD subsystem 10, a P-vol-rendition operation is denied).

   If problems arise as a result of this check, it is judged that an error has occurred, and control moves on to step S36, and, in the absence of any problems, control moves on to step S34.
(4) Step S34: Judgment 3: S-vol check
   This step involves checking, for a logical device that is an S-vol-rendition operation target, conditions such as:
   (a) whether the LDEV number of the logical device is valid;
   (b) whether the logical device is mounted and normal
   (c) whether the logical device may be rendered an S-vol (in particular, if the S-vol disable bit shown in Fig. 5 is '1', the logical device cannot be rendered an S-vol and, even if the S-vol disable bit is not '1', there can be cases where, due to the relationship with another function or operation performed by the HDD subsystem 10, for example, an S-vol-rendition operation is denied).

   If problems arise as a result of this check, it is judged that an error has occurred, and control moves on to step S36, but, in the absence of any problems, control moves on to step S35.
(5) Step S35: Copy pair formation
   In this step, the two operation-target logical devices are designated as a P-vol and S-vol respectively, data is copied from the P-vol to the S-vol such that a copy pair is formed from the two volumes. Control then moves on to step S36.
(6) Step S36: Increment of formed copy pair serial numbers
   The formed copy pair is incremented by one, and then the control moves on to step S37.
(7) Step S37: Judgment 4: Termination judgment
   This step involves checking whether the formed copy pair serial number has reached the quantity of formation-target copy pairs. As a result, if this quantity has not been reached, the control moves on to step S33, whereupon a similar process is performed for the next formation-target copy pair. If this quantity is reached, the copy-pair forming operation is terminated. In the event of an error in the copy-pair forming operation for any of the formation-target copy pairs, a response, which is to be returned to an external device (a service processor (console terminal) or a host) includes information on the cause of the error for each copy pair exhibiting the error.

The configuration and functions of the HDD subsystem 10 according to this embodiment were described above. A usage method and usage example of a security function of the HDD subsystem 10 will be described below.

First, the security-function usage method will be described. That is, in order to allow a host to use a certain logical device after same has been set with the modes Read Only and Unreadable/Unwritable among the six types of access attribute mode already described, operations such as the following operations are performed in sequence:
(1) the access attribute mode is set for the target logical device; and
(2) a host, which is connected to (mounted on) the target logical device, runs, and then
(3) the host using the target logical device starts up.

On the other hand, the access attribute modes other than those mentioned above, that is, Readable/Writable, Read Capacity 0, Restricted inquiry, and S-vol disable do not require a special procedure such as that described above.

Next, a usage example for the security function will be briefly described. That is, the six types of access attribute mode can be used for the following applications, for example.
(1) Read Only usage example
   Data archiving (government and municipal documents, medical charts, settlement documents, mail history, and so forth), the publication of data on Web sites, and the like;
(2) Unreadable/Unwritable usage example
   Temporary data non-publication (Web sites, and so forth), the prevention of data destruction during the running of the host operation, and so forth.
(3) Read Capacity 0/Restricted inquiry usage example
   Long-term data non-publication, the hiding of the existence of data, and the like
(4) S-vol Disable usage example
   Data security in the environment of automatic copy pair formation, and so forth

The description of this embodiment provided thus far can be realized in abstract terms as follows, for example.
(1) Rendition 1
   A storage system which can communicate with one or more outer unit, the storage system comprising:
   a plurality of logical devices;
   access attribute mode setting means that sets one or more access attribute mode for each logical device, the access attribute mode being selected from a plurality of predetermined access attribute modes; and
   access control means that controls a requested access operation, according to an access attribute mode which is set for the designate logical device, when a command requesting the access operation on a logical device which is designated from the outer unit is input, and outputs a response having information on a result of the controlled access operation to the outer unit, wherein
   one or more device recognition control mode for applying predetermined restriction to a device recognition type operation by which the outer unit recognizes a logical device itself or the capacity thereof is included in the predetermined access attribute mode; and
   the access control means comprises device recognition control means for outputting, in a case that the access attribute mode which is set for the designated logical device is the device recognition control mode and the access operation requested from the outer unit is the device recognition type operation on the designated logical device, a response having information on a result of adding the predetermined restriction which accords to the set device recognition control mode to the requested device recognition type operation, the result being output to the outer unit.
(2) Rendition 2
   The storage system according to Rendition 1, wherein
   one of the device recognition restriction modes is of zero reading capacity, and in a case that the access attribute mode which is set for the designated logical device is said zero reading capacity and the access operation requested by the outer unit is to recognize the capacity of the designated logical device, the device recognition control means of the access control means outputs a response having information which indicates that the capacity of the designated logical device is zero.
(3) Rendition 3
   The storage system according to Rendition 1, wherein
   one of the device recognition restriction modes is restriction of an inquiry, and in a case that the access attribute mode which is set for the designated logical device is the restriction of an inquiry and the access operation requested by the outer unit is to recognize the designated logical device itself, the device recognition control means of the access control means outputs a response having information which indicates a result of restriction of recognition of the designated logical device, to the outer unit.
(4) Rendition 4
   The storage system according to Rendition 1, wherein
   in a case that the access attribute mode which is set for the designated logical device is the device recognition control mode, and the access operation requested by the outer unit is to read or write data from/to the designated logical device, the device recognition control means of the access control means outputs a response having information which indicates a result of restriction of reading or writing data from/to the designated logical device, to the outer unit.
(5) Rendition 5
   A storage system which can communicate with one or more outer unit, the storage system comprising:
   a plurality of logical devices;
   access attribute mode setting means that sets one or more access attribute mode for each logical device, the access attribute modes being selected from a plurality of predetermined access attribute modes; and
   access control means that controls a requested access operation, according to an access attribute mode which is set for the designated logical device, when a command requesting the access operation on a logical device which is designated by the outer unit is input, and outputs a response having information on a result of the controlled access operation to the outer unit, wherein
   one or more copy pair forming control mode for applying predetermined restriction to a copy pair forming operation for forming a copy pair with another logical device, having the designated logical device as a secondary volume, is included in the predetermined access attribute mode; and
   the access control means comprises copy pair forming control means for outputting, in a case that the access attribute mode which is set for the designated logical device is the copy pair forming control mode and the access operation requested from the outer unit is the copy pair forming operation on the designated logical device, a response having information on a result of adding the predetermined restriction which accords to the set copy pair forming control mode to the requested copy pair forming operation, the result being output to the outer unit.

### Rendition (6)

The storage system according to Rendition 5, wherein
the predetermined access attribute mode further includes more then one or one data manipulation control mode for controlling data manipulation type operation for reading or writing data from/to the designated logical device, and/or one or more device recognition control mode for controlling device recognition type operation for recognizing the designated logical device itself or the capacity thereof; and
the access attribute mode setting means can set both the data manipulation control mode and the copy pair forming control mode in duplicate, or both the device recognition control mode and the copy pair forming control mode in duplicate, on the same logical device.

### (7) Rendition 7

A storage system which can communicate with a plurality of outer units of different types, comprising:
unit mode setting means that selects a single unit mode corresponding to a unit type of each of the outer units from a plurality of predetermined unit modes and sets the selected unit mode on each of the outer units;
mode dependent operation storage means that stores a type of operation to be performed when a command of a predetermined type is processed, for each unit mode;
mode dependent response storage means that stores a type of information to be included in a response to the processed command in a case that a result of processing the command is a result of a predetermined type, for each unit mode;
command processing means, the command processing means being for processing a command which is input from one of the outer units, which, in a case that the command which has been input is a command of the predetermined type, selects an operation type in processing the command which has been input, the operation type being correspondent to a unit mode which is set for the outer unit which has issued the command and being selected from operation types for respective unit modes stored in the mode dependent operation storage means, and performs an operation corresponding to the selected type of operation; and
command responding means that outputs a response including information corresponding to a result of processing by the command processing means to the outer unit which has issued the command, and in a case that the result of the processing is the result of the predetermined type, selects an information type corresponding to the unit mode which is set for the outer unit which has issued the command, the information type being selected from information types for the respective unit modes stored in the mode dependent operation storage means, and outputs a response including information corresponding to the selected information type to the outer unit which has issued the command.

### (8) Rendition 8

A computer system comprising a plurality of outer units of different types and a storage system which can communicate with the outer units, wherein
each of the plurality of outer units is installed with an application program which uses the storage system, and a storage management program for performing management control associated with setting and controlling a security function for logical devices of the storage system, according to an instruction from the application program; and
each of the plurality of outer units automatically performs the management control of the storage system from the application program through the storage management program.

Each of the means in Renditions 1 to 7 above can be implemented by hardware, computer programs or by a combination thereof.

The principal parts of this embodiment will now be described below. In the following description, the description of parts that are the same as those in the description above will be omitted or simplified. Furthermore, the HDD subsystem 10 is referred to in the following description as the 'first storage system 10'.

Fig. 17 is an example of the configuration of a computer system relating to the principal parts of this embodiment.

In the computer system 1, the first storage system 10 is provided with one or a plurality (two, for example) of second storage systems 10A, 10B, as external storage systems. In the illustrated example, the second storage system 10A is connected to a network 61 such as a SAN and the second storage system 10B is connected to a network 62 such as the Internet. As a result of this configuration, the first storage system 10, and the second storage systems 10A and 10B are able to communicate with each other via at least one of the networks 61 and 62.

The second storage system 10A can be configured in substantially the same manner as the first storage system 10, for example. In other words, as shown by way of example, the second storage system 10A is provided with one or more open channel controllers 12A, a control memory 13A, a cache memory 14A, a disk controller 15A, and physical devices (a HDD unit, magnetic tape recording device, or DVD-R drive, and the like, for example, similarly also to the first storage system 10) 16A-1 to 16A-N. The physical devices 16A-1 to 16A-N are equipped with one or more logical devices (also called LDEV or logical volumes) 501.

The second storage system 10B can be afforded a simpler configuration than the first storage system 10, for example. For example, the second storage system 10B comprises an open channel interface (I/F) 2 for communicating via the network 62, a control memory 13A, a cache memory (abbreviated to 'CM' below) 14A, a processor 601, physical devices 16A-1 to 16A-N and a disk controller 15B. Each of these constituent elements is connected to the other constituent elements via an internal bus. The processor 601 controls the other constituent elements 2, 13A, 14A, and 15A, and thus controls the whole operation of the second storage system 10B. One or more logical devices 501 are provided in the physical devices 16A-1 to 16A-N (hereinafter, a logical device in the first storage system 10 is known as an 'internal LDEV' and a logical device in the second storage systems 10A, 10B is known as an 'external LDEV', LDEV' being used to refer to either LDEV).

At least one of the open channel controller 12 and the disk controller 15 of the first storage system 10 may be provided with the processor 601. Likewise, at least one of the open channel controller 12A and the disk controller 15A of the second storage system 10A may be provided with the processor 601. The processor 601, which is provided in the first storage system 10 and the second storage systems 10A and 10B is a CPU (Central Processing Unit) or MPU (Micro Processing Unit), for example. The processor 601 acquires security information on the first LDEV from the access attribute control table, for example, sets the acquired security information for the second LDEV and is able to control access by the hosts 21, 22 and 31 to 33 to a certain LDEV in accordance with the access attribute mode included in the security information. Further, the security information is attribute information relating to the security of the corresponding LDEV and information that includes, for example, the access attribute modes, the attribute change permission password and the storage deadline (until when the data in the corresponding LDEV is to be stored (which year, month, and day, for example) . As mentioned earlier, for example, there are six types of access attribute mode, namely: (1) Readable/Writable (R/W-capable), (2) Read Only, (3) Unreadable/Unwritable (R/W-incapable), (4) Read Capacity 0, (5) Restricted Inquiry, and (6) Secondary volume disable (S-vol disable).

In this embodiment, a copy process is performed such that data in a first LDEV that exists in an old physical device, which is the first storage system 10 or the second storage system 10A, 10B is copied to a second LDEV that exists in a new physical device (a physical device for which the time at which failure can occur precedes that of the old physical device) that exists in the same or in a different storage system from the old physical device. Several copy processes will be described below as examples.

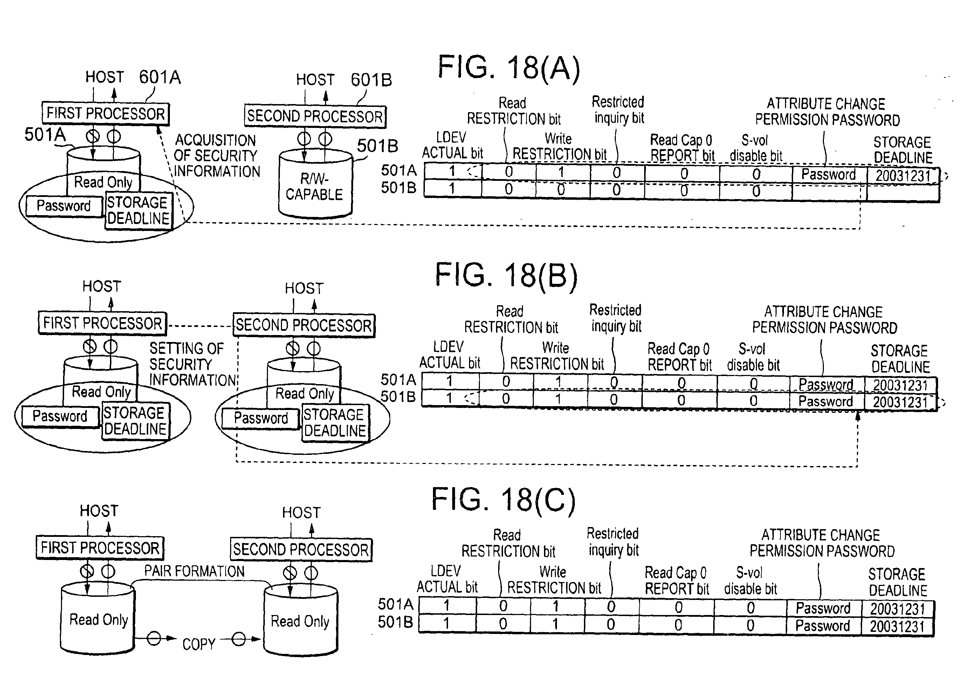

Fig. 18 shows a first example of a first copy process that is performed by this embodiment.

In this first copy process, a first LDEV 501A constituting the copy source and a second LDEV 501B constituting the copy destination may exist in any storage system among the first storage system, and the second storage systems 10A and 10B. In other words, the copying of data from the first LDEV 501A to the second LDEV 501B may be performed within the same storage system or may be performed between separate storage systems.

Further, in the first copy process, a first processor 601A exists in a storage system that comprises the first LDEV 501A, while the second processor 601B exists in a storage system that comprises the second LDEV 501B. In other words, the first processor 601A and the second processor 601B may be the same processor or separate processors.

Moreover, in the first copy process, the reading of data from the first LDEV 501A is performed irrespective of whether a host I/O is received. Similarly, the writing of the read data to the second LDEV 501B is performed irrespective of whether a host I/O is received.

Further, in a first example of the first copy process, the access attribute mode of the first LDEV 501A is Read Only. Further, the access attribute mode of the second LDEV 501B executed before the first copy process is R/W-capable.

The process flow of the first example of the first copy process is as detailed below, for example.

As shown in Fig. 18(A), the first processor 601A (or second processor 601B) acquires security information corresponding with the first LDEV 501A from the access attribute control table 201 (or 201A).

Next, as shown in Fig. 18(B), the second processor 601B (or first processor 601A) writes the acquired security information in the fields corresponding with the second LDEV 501B in the access attribute control table 201 (or 201A).

Further, as shown in Fig. 18(C), the first processor 601A or second processor 601B (or both together) renders the first LDEV 501A a P-vol and the second LDEV 501B an S-vol, forms a pair from the P-vol and S-vol, and then copies data in the first LDEV 501A to the second LDEV 501B without the intervention of the hosts 21 and 22 and 31 to 33.

According to the above embodiment, security information, which has the same content as the security information set for the first LDEV 501A constituting the data copy source, is set for the second LDEV 501B constituting the data copy destination. As a result, the same security as the copy source can be provided for the copy destination.

Further, according to the above embodiment, the setting of security information is performed when data in the first LDEV 501A is copied to the second LDEV 501B. Hence, security information may be efficiently set for the copy destination. As a result, for example, the access attribute modes of the second LDEV 501B is changed from R/W-capable to Read Only, which is the same as the access attribute mode of the first LDEV 501A constituting the copy source.

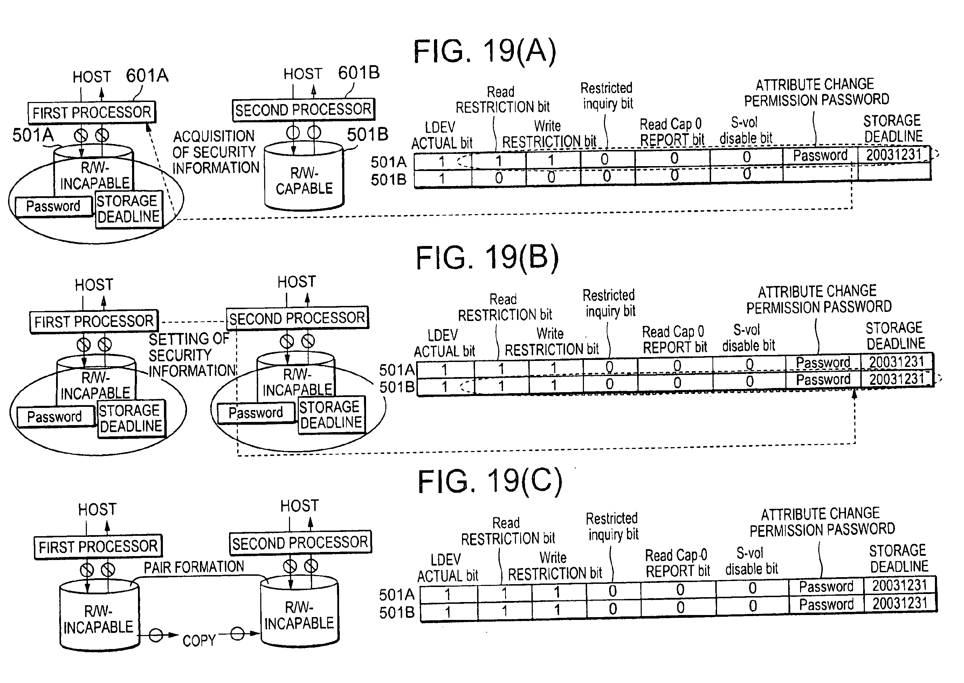

Fig. 19 shows a second example of a first copy process performed by this embodiment.

According to the second example, a similar process flow is performed under the same conditions as the first example above, with the exception of the access attribute mode of the first LDEV 501A being R/W-incapable.

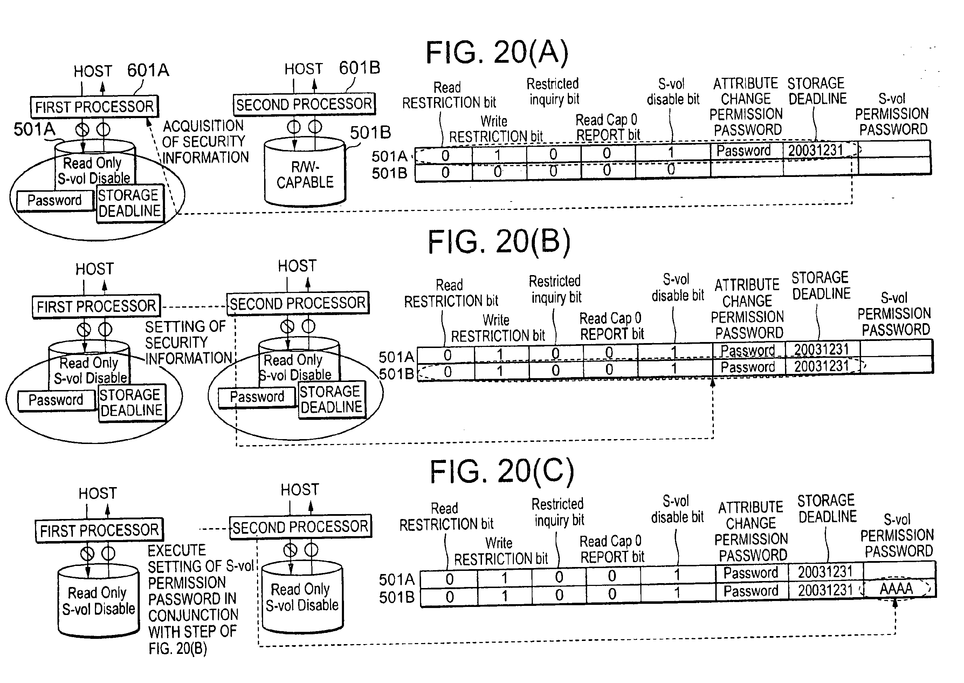

Fig. 20 shows an example of a second copy process which does not form part of the present invention that is performed by this embodiment.

According to the second copy process, the first LDEV 501A constituting the copy source and the second LDEV 501B constituting the copy destination may exist in any storage system among the first storage system, and the second storage systems 10A and 10B. In other words, the copying of data from within the first LDEV 501A to the second LDEV 501B may be performed within the same storage system or between separate storage systems.

Furthermore, according to the second copy process, the first processor 601A exists within the storage system that comprises the first LDEV 501A, and the second processor 601B exists within the storage system that comprises the second LDEV 501B. In other words, the first processor 601A and the second processor 601B may be the same processor or separate processors.

In addition, according to the second copy process, the reading of data from the first LDEV 501A is performed irrespective of whether a host I/O is received. Similarly, the writing of the read data to the second LDEV 501B is performed irrespective of whether a host I/O is received.

Further, according to the second copy process, the access attribute modes of the first LDEV 501A are Read Only and S-vol disable. Further, the access attribute mode of the second LDEV 501B executed before the second copy process is R/W-capable.

Furthermore, the access attribute control table 201 (and/or 201A) provides a storage area for an S-vol permission password for each LDEV. When S-vol disable is set as the access attribute mode, the corresponding LDEV cannot be rendered an S-vol. However, in cases where an S-vol permission password is allocated, only when the S-vol permission password has been inputted can the LDEV be rendered an S-vol.

The process flow of the second copy process is as detailed below, for example.

As shown in Fig. 20(A), the first processor 601A (or second processor 601B) acquires security information corresponding with the first LDEV 501A from the access attribute control table 201 (or 201A).

Next, as shown in Fig. 20(B), the second processor 601B (or first processor 601A) writes the acquired security information to the fields corresponding with the second LDEV 501B in the access attribute control table 201 (or 201A).

Next, as shown in Fig. 20(C), when the process shown in Fig. 20(B) is executed, the second processor 601B (or first processor 601A) writes an S-vol permission password corresponding with the second LDEV 501B in the S-vol permission password storage area corresponding with the second LDEV 501B in the access attribute control table 201 (or 201A). The S-vol permission password may be determined automatically by the second processor 601B (or the first processor 601A) or may be inputted by at least one of the hosts 21 and 22 and 31 to 33, or by the console terminals 51, 52 or service processor 41.

When security information and the S-vol permission password have been set for the second LDEV 501B in the process flow shown in Figs. 20(A) to 20(C), the following process is then performed, for example.

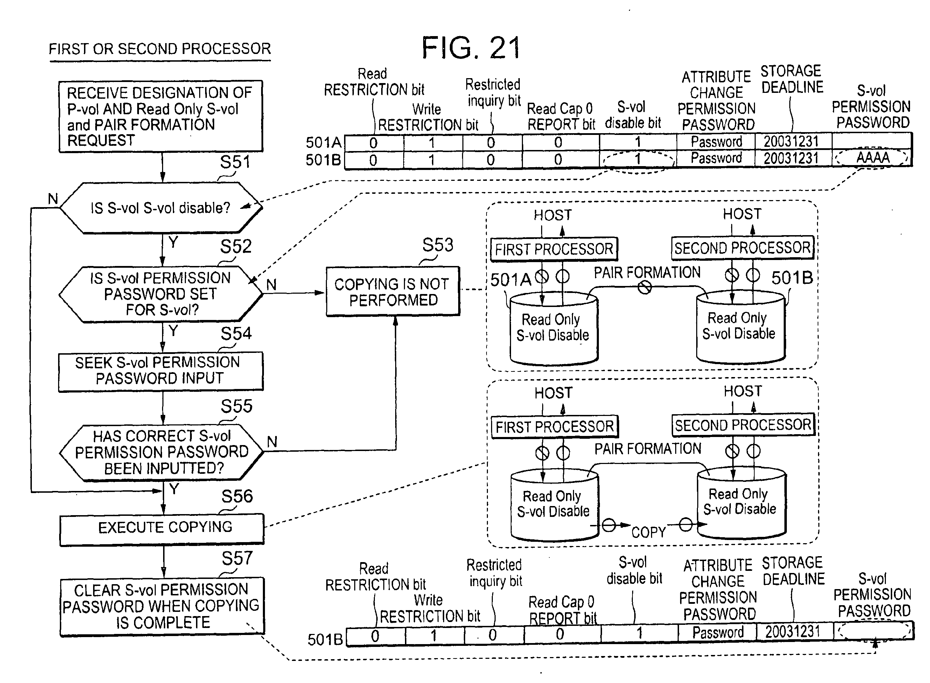

Fig. 21 shows the flow of a process performed when security information and an S-vol permission password are set for the second LDEV 501B, in the second copy process.

Upon receiving designation of a P-vol and Read Only S-vol together with a pair formation request, the second processor 601B (or the first processor 601A) accesses the access attribute control table 201, references the access attribute mode field corresponding with the designated S-vol (LDEV#, for example). If it is judged that S-vol disable has not been set as the S-vol access attribute mode (N in S51), the first processor 601A or second processor 601B (or both together) forms a pair from the designated P-vol and S-vol and copies data (S56) in the P-vol (first LDEV 501A) to the S-vol (second LDEV 501B).

On the other hand, when it is judged in S51 that S-vol disable has been set as the S-vol access attribute mode (Y in S51), the second processor 601B (or first processor 601A) accesses the access attribute control table 201 to reference the S-vol permission password storage area corresponding with the designated S-vol, and thus judges whether the S-vol permission password has been set (S52) .

When it is judged in S52 that the S-vol permission password has not been set, the second processor 601B (or first processor 601A) rejects the copying of data in the first LDEV 501A to the second LDEV 501B (S53) . More specifically, for example, the second processor 601B (or first processor 601A) does not form a pair from the designated P-vol and S-vol.

On the other hand, when it is judged in S52 that the S-vol permission password has been set, the second processor 601B (or first processor 601A) seeks an S-vol permission password input (S54) . If it is judged that the correct S-vol permission password has been inputted by way of response (Y in S55), the copying of S56 above is executed. Further, the destination of a request for an input of an S-vol permission password in S54 is one terminal that is selected from among the hosts 21 and 22 and 31 to 33, and the console terminals 51, 52 and the service processor 41, for example.

After the copying of S56 is complete, the second processor 601B (or first processor 601A) erases (S57) the S-vol permission password associated with the second LDEV 501B from the access attribute control table 201 (or 201A). As a result, for example, the access attribute mode of the second LDEV 501B is changed from the initial R/W-capable mode to the Read Only mode and S-vol disable, these being the same modes as the access attribute modes of the first LDEV 501A constituting the copy source.

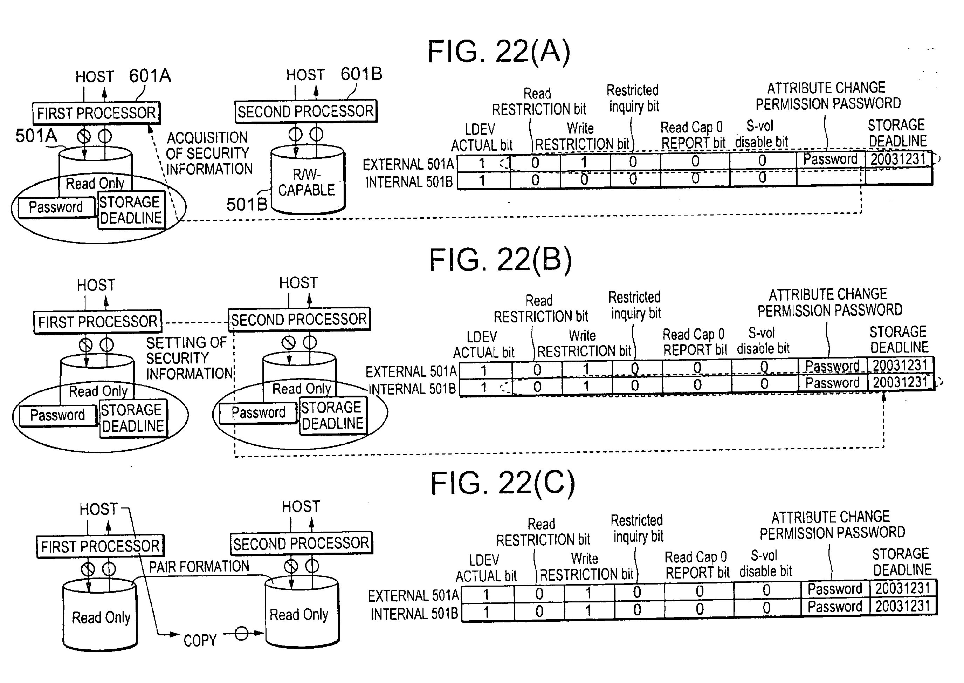

Fig. 22 shows an example of a third copy process which does not form part of the present invention performed in this embodiment.

According to the third copy process, the copying of data from the first LDEV 501A constituting the copy source to the second LDEV 501B constituting the copy destination is performed between separate storage systems. According to this third copy process, the second LDEV 501B exists in the first storage system 10, and the first LDEV 501A exists in the second storage system 10A or 10B. In the description of the third process hereinbelow, the second LDEV 501B will be expediently referred to as the 'internal LDEV 501B' and the first LDEV 501A will be expediently referred to as the 'external LDEV 501A'.

Further, according to the third copy process, the first processor 601A exists in the second storage system 10A or 10B that comprises the external LDEV 501A, while the second processor 601B exists in the first storage system 10 that comprises the internal LDEV 501B.

Further, according to the third copy process, the reading of data from the external LDEV 501A is performed upon receipt of a host I/O request (read command, for example) . However, the writing of the read data to the internal LDEV 501B is performed irrespective of whether a host I/O has been received.

In addition, in the example of the third copy process, the access attribute mode of the external LDEV 501A is Read Only. Further, the access attribute mode of the internal LDEV 501B executed prior to the third copy process is R/W-capable.

The process flow of an example of the third copy process is as follows, for example.

As shown in Fig. 22 (A), the first processor 601A contained in the second storage system 10A or 10B acquires security information corresponding with the external LDEV 501A from the access attribute control table 201A. The first processor 601A transmits the acquired security information to the first storage system 10 that comprises the second processor 601B.

Subsequently, as shown in Fig. 22 (B), the second processor 601B writes security information received from the second storage system 10A or 10B to the fields corresponding with the internal LDEV 501B in the access attribute control table 201.

Next, as shown in Fig. 22 (C), the first processor 601A or second processor 601B (or both together) renders the external LDEV 501A the P-vol, and the internal LDEV 501B the S-vol, accordingly forms a pair from the P-vol and S-vol, and then copies data read from the external LDEV 501A by any of the hosts 21 and 22 and 31 to 33 to the internal LDEV 501B without the intervention of the hosts 21 and 22 and 31 to 33.

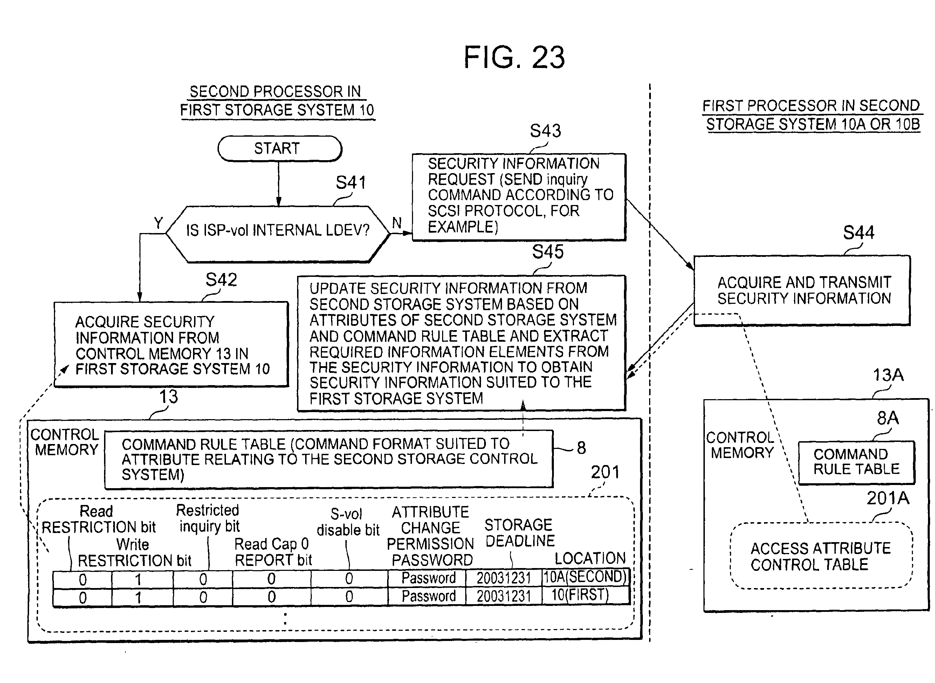

During the process of Fig. 22(B) above, when the received security information differs in format from the security information of the first storage system 10 due to a difference in attributes (vendor, manufacturer, machine type or the OS (Operating System) of the processor 601) between the first storage system 10 and the second storage system 10A or 10B, the received security information can be converted to security information adapted to the first storage system 10 by means of the method illustrated in Fig. 23, for example.

Fig. 23 is a diagram serving to illustrate the method of obtaining security information suited to the first storage system based on security information received from the second storage system 10A or 10B.

In addition to information on the LDEV within the storage system [in which the second processor is itself contained], the second processor also registers information relating to the LDEV that all the other storage systems have in at least one of the access attribute control tables 201 and 201A. For example, information relating to the LDEV that all the other storage systems (the second storage systems 10A and 10B, for example) have is registered in the access attribute control table 201 of the first storage system 10 in addition to the LDEV that the first storage system 10 comprises. In this case, for example, security information and locations are registered in the access attribute control table 201 for each of a plurality of LDEV that are contained in a plurality of storage systems provided in the computer system 1 relating to this embodiment. Location information is, for example, information indicating where in the first storage system 10 and second storage system 10A or 10B a corresponding LDEV is located.

In addition, a command rule table 8 is stored in the control memory 13 of the first storage system 10 (and/or the control memory 13A of the second storage system 10A). The command format (information indicating where a particular information element (access attribute mode, for example) is located in the security information, for example), which corresponds with attributes relating to the storage system (at least one of the vendor, manufacturer, machine type, and processor OS, for example), is registered in the command rule table 8. When security information is received from an external storage system, the command rule table 8 is referenced by using the attributes relating to the transmission source of the security information (the external storage system), and it can be accordingly ascertained where a particular information element is in the received security information.

For example, in Figs. 22(A) and 22(B), the second processor 601B references the access attribute control table 201 to judge whether the LDEV designated as the P-vol is an internal LDEV or an external LDEV (S41).

When it is judged in S41 that the designated P-vol is an internal LDEV (Y in S41), the second processor 601B acquires security information corresponding with the internal LDEV from the access control table 201 (S42) and writes the acquired security information in the access control table 201, associating this information with the internal LDEV designated as the S-vol.

On the other hand, when it is judged in S41 that the designated S-vol is an external LDEV (N in S41), the second processor 601B issues a request for security information to the second storage system 10A or 10B that comprises the external LDEV (sends an inquiry command according to the SCSI protocol, for example) (S43).

In response to the request from the first storage system 10, the first processor 601A acquires security information relating to the external LDEV from the access attribute control table 201 and sends the acquired security information to the first storage system 10 (S44).

The second processor 601B analyzes the security information received from the second storage system 10A or 10B based on the attributes relating to the second storage system 10A or 10B constituting the transmission source of the security information, and the command rule table 8, and thus ascertains where in the security information a particular information element is. The second processor 601B then extracts the required information elements among the information elements thus determined (the access attribute mode, attribute change permission password, and storage deadline, for example), and accordingly obtains security information suited to the first storage system 10 (S45) . The second processor 601B writes the security information in the fields corresponding with the internal LDEV 501B in the access attribute control table 201.

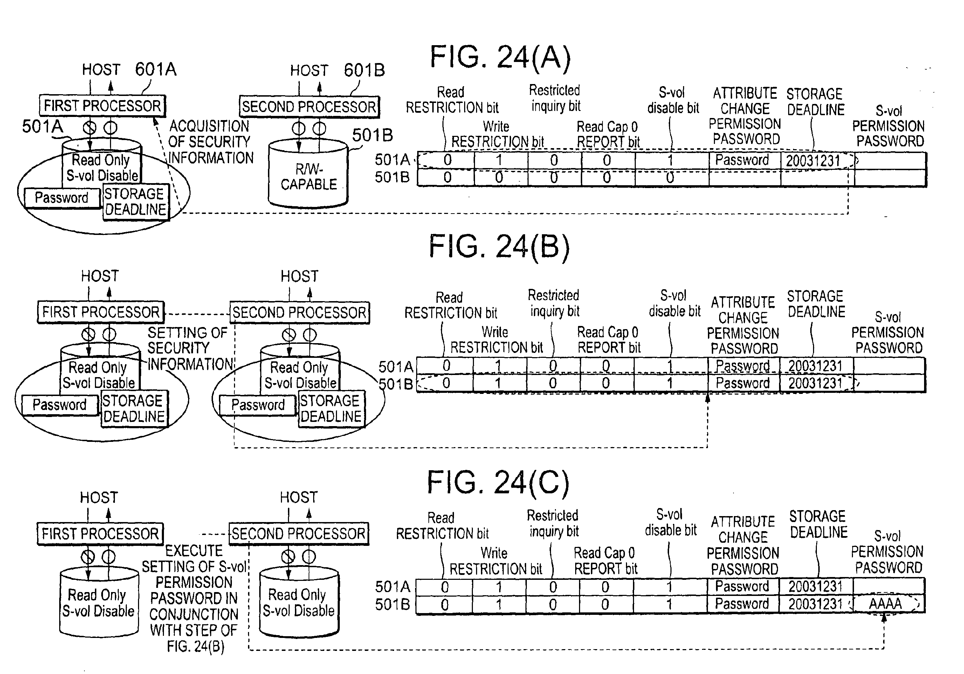

Fig. 24 shows an example of a fourth copy process which does not form part of the present invention performed in this embodiment.

In the fourth copy process, the conditions are the same as those of the third copy process except for the fact that the access attribute modes of the external LDEV 501A are Read Only and S-vol disable.

As shown in Fig. 24 (A), the first processor 601A acquires the security information corresponding with the external LDEV 501A from the access attribute control table 201A.

Next, as shown in Fig. 24 (B), the second processor 601B writes security information from the second storage system 10A or 10B in fields corresponding with the internal LDEV 501B in the access attribute control table 201.

Further, as shown in Fig. 24 (C), when the process shown in Fig. 24(B) is executed, the second processor 601B writes an S-vol permission password corresponding with the internal LDEV 501B to an S-vol permission password storage area corresponding with the internal LDEV 501B in the access attribute control table 201. This S-vol permission password may be determined automatically by the second processor 601B, or may be inputted by at least one of the hosts 21 and 22 and 31 to 33 or inputted by the console terminals 51, 52 or the service processor 41.

When the security information and S-vol permission password have been set for the internal LDEV 501B in the process flow shown in Figs. 24 (A) to 24 (C), the following process is then performed, for example.

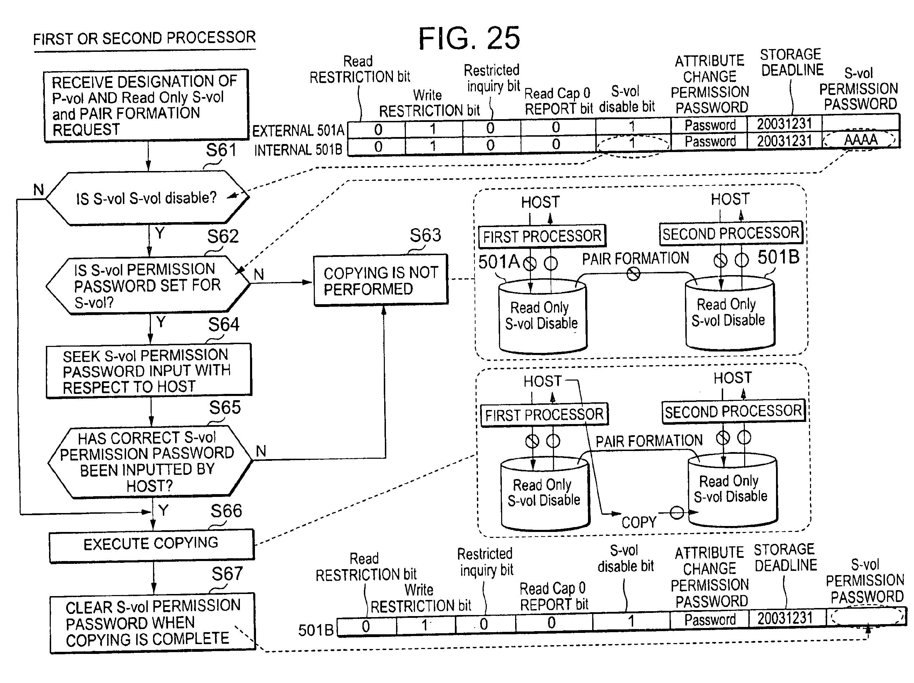

Fig. 25 shows the flow of a process that is performed in a case where security information and an S-vol permission password are set for the internal LDEV 501B, in the fourth copy process.

Upon receiving designation of a P-vol and Read Only S-vol together with a pair formation request, the second processor 601B (or the first processor 601A) accesses the access attribute control table 201 and references the access attribute mode fields corresponding with the designated S-vol. If it is judged that S-vol disable has not been set as the S-vol access attribute mode (N in S61), the first processor 601A or second processor 601B (or both together) forms a pair from the designated P-vol and S-vol and copies data (S66) in the P-vol (external LDEV 501A) to the S-vol (internal LDEV 501B). At this time, data is read from the P-vol by any of the hosts 21 and 22 and 31 to 33 and the data thus read is written to the S-vol without the intervention of the hosts 21 and 22 and 31 to 33.

On the other hand, when it is judged in S61 that S-vol disable is set as the S-vol access attribute mode (Y in S61), the second processor 601B (or first processor 601A) accesses the access attribute control table 201 to reference the S-vol permission password storage area corresponding with the designated S-vol, and judges whether an S-vol permission password has been set (S62).

When it is judged in S62 that an S-vol permission password has not been set, the second processor 601B (or first processor 601A) rejects (S63) the copying of data in the external LDEV 501A to the internal LDEV 501B. More specifically, for example, the second processor 601B (or first processor 601A) forms a pair from the designated P-vol and S-vol.

On the other hand, when it is judged in S62 that an S-vol permission password has been set, the second processor 601B (or first processor 601A) seeks an S-vol permission password input (S64). If it is judged that the correct S-vol permission password has been inputted by way of response (Y in S65), the copying of S56 above is executed.

After the copying of S66 is complete, the second processor 601B (or first processor 601A) erases (S67) the S-vol permission password associated with the internal LDEV 501B from the access attribute control table 201.

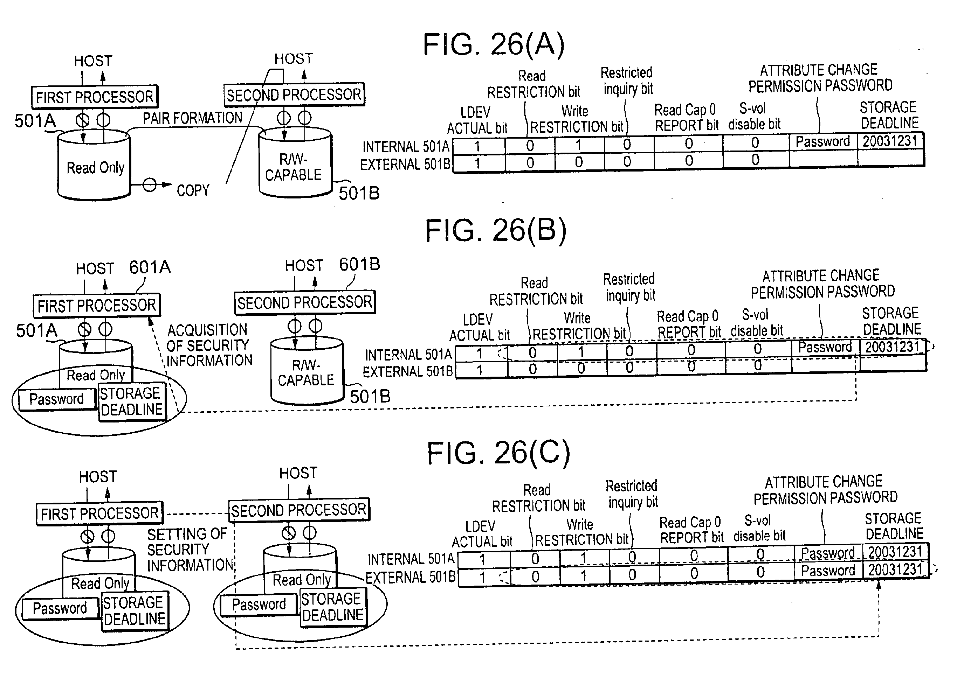

Fig. 26 shows an example of a fifth copy process which does not form part of the present invention that is performed in this embodiment.

According to the fifth copy process, the copying of data from the first LDEV 501A constituting the copy source to the second LDEV 501B constituting the copy destination is performed between separate storage systems. According to this fifth copy process, the first LDEV 501A exists in the first storage system 10, and the second LDEV 501B exists in the second storage system 10A or 10B. In the description of the fifth process hereinbelow, the first LDEV 501A will be expediently referred to as the 'internal LDEV 501A' and the second LDEV 501B will be expediently referred to as the 'external LDEV 501B'.

Further, according to the fifth copy process, the first processor 601A exists in the first storage system 10 that comprises the internal LDEV 501A, while the second processor 601B exists in the second storage system 10A or 10B that comprises the external LDEV 501B.

Further, according to the fifth copy process, the reading of data from the internal LDEV 501A is performed irrespective of whether a host I/O (read command based on the SCSI protocol, for example) is received. However, the writing of the read data to the external LDEV 501B is performed when a host I/O (a write command based on the SCSI protocol, for example) has been received.

In addition, in this example of the fifth copy process, the access attribute mode of the internal LDEV 501A is Read Only. Further, the access attribute mode of the external LDEV 501B executed prior to the fifth copy process is R/W-capable.

The process flow of an example of the fifth copy process is as follows, for example.

As shown in Fig. 26(A), the first processor 601A or second processor 601B (or both together) render the internal LDEV 501A a P-vol and the external LDEV 501B an S-vol, accordingly forms a pair from the P-vol and S-vol, and then writes data read from the internal LDEV 501A without the intervention of the hosts 21 and 22 and 31 to 33 to the external LDEV 501B by means of any of the hosts 21 and 22 and 31 to 33.

Next, as shown in Fig. 26 (B), the first processor 601A acquires security information corresponding with the internal LDEV 501A from the access attribute control table 201. The first processor 601A then sends the acquired security information to the second storage system 10A or 10B that comprises the second processor 601B.

Subsequently, as shown in Fig. 26 (C), the second processor 601B writes security information received from the first storage system 10 in fields corresponding with the external LDEV 501B in the access attribute control table 201A. Accordingly, for example, the access attribute mode of the external LDEV 501B is changed from R/W-capable to Read Only, which is the same as the access attribute mode of the copy source.

Several copy process examples were described above. Further, it is considered desirable to check whether the data copied to the second LDEV 501B is corrupted when each copy process is performed.

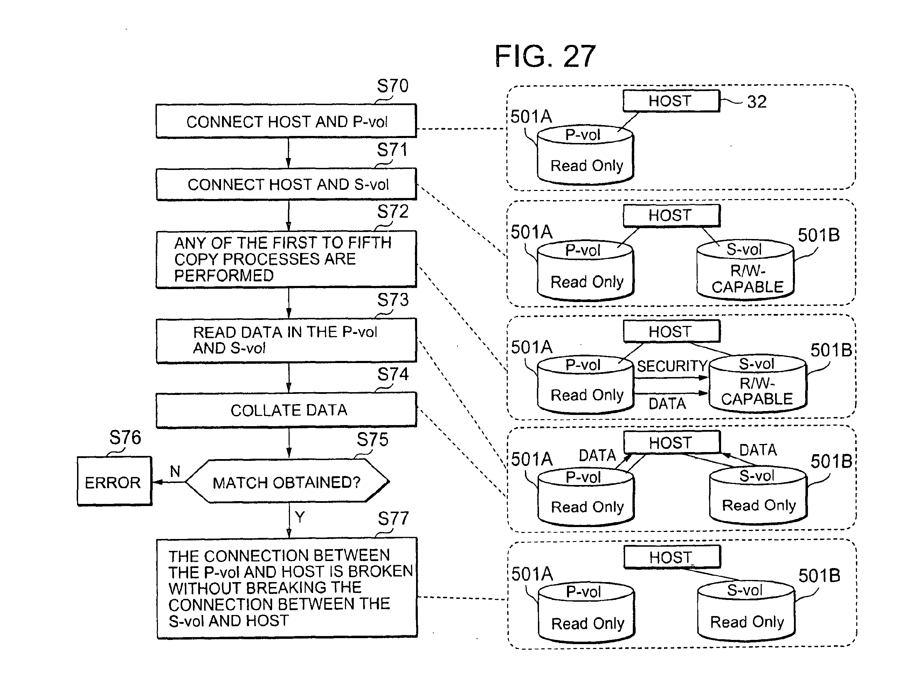

Fig. 27 shows an example of the flow of a process for checking whether data copied to the second LDEV 501B is corrupted (hereinafter a data security check process).

Any of the hosts 21 and 22 and 31 to 33 is capable of executing the process shown in Fig. 27. The host 32 executes this process hereinbelow.

Further, both the reading of data from P-vol (first LDEV) 501A and the reading of data from the S-vol (second LDEV) 501B are performed in accordance with a read command from the host 32.

Suppose also that the access attribute mode of the P-vol 501A is Read Only.

The host 32 connects (S70) to the P-vol 501A in accordance with a pre-defined logical path with the P-vol 501A. The host 32 also connects (S71) to the S-vol 501A in accordance with a new defined logical path to the S-vol 501A. The logical path to the LDEV is registered, for each LDEV, in the access attribute control table 201 (and 201A), for example, and, when the storage system receives a predetermined command from the host 32, the logical path recorded in the access attribute control table 201 (or 201A) of the storage system itself can be reported to the host 32 in response to the command. Accordingly, the host 32 is able to connect to the desired LDEV 501 selected from the plurality of LDEV 501 in accordance with the logical path thus reported.

When any of the first to fifth copy processes is performed, that is, when data in the P-vol 501A is copied to the S-vol 501B, and security information of the same content as the security information set for the P-vol 501A is set for the S-vol 501B (S72), the host 32 issues a read command to both the P-vol 501A and the S-vol 501B, and thus data is read from the P-vol 501A and the S-vol 501B respectively (S73).

The host 32 then collates the data read from the P-vol 501A and the S-vol 501B (S74).

If a match is not obtained (N in S75) as a result of S74, the host 32 performs predetermined error processing (S76), and, if a match is obtained (Y in S75), the connection with the S-vol 501B is retained and the connection with the P-vol 501A is broken (S77) .

The host 32 is able to erase data that exists in either of the first LDEV 501A constituting the copy source and the second LDEV 501B constituting the copy destination based on the results of the data security check process.

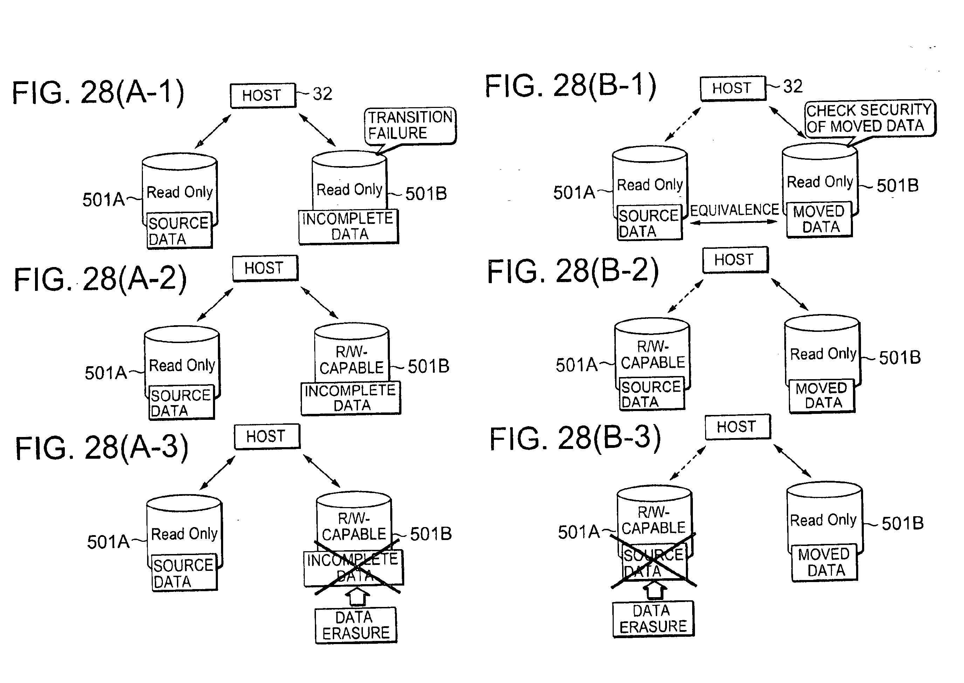

Fig. 28 shows an example of the flow of a data erasure process based on the results of the data security check process.

As shown in Fig. 28(A-1), when there is no match in the data security check process in S75 (that is, when the data in the S-vol 501B is corrupted), the processor 601 in the first storage system 10 or the second storage system 10A, 10B changes the access attribute mode corresponding with the S-vol 501B to R/W-capable as shown in Fig. 28(A-2)and reports this change to the host 32. Next, as shown in Fig. 28(A-3), incomplete data in the S-vol 501B (corrupted data) is erased in response to a command from the host 32. More specifically, for example, the processor 601 in the first storage system 10 or second storage systems 10A and 10B receives write target data constituted by a format command or a predetermined code from the host 32, and accordingly writes data constituted by a predetermined code (0, for example) to the S-vol 501B such that the incomplete data is erased from the S-vol 501B.

On the other hand, as shown in Fig. 28(B-1), when a match is obtained in the data security check process in S75 (that is, when data in the S-vol 501B is not corrupted), the processor 601 in the first storage system 10 or second storage system 10A, 10B changes the access attribute mode corresponding with the P-vol 501A to R/W-capable as shown in Fig. 28(B-2) and reports this change to the host 32. Next, as shown in Fig. 28(B-3), source data in the P-vol 501A (copy source data) is erased in response to a command from the host 32. More specifically, for example, the processor 601 in the first storage system 10 or second storage system 10A, 10B receives write target data constituted by a format command or a predetermined code from the host 32, and accordingly writes data constituted by a predetermined code (0, for example) to the P-vol 501A such that the source data is erased from the P-vol 501A.

An example of a data security check process and a data erasure process based on the results thereof was detailed above. Further, the illustrated process flow is merely an example. The data security check process can also be performed by means of a different process flow. For example, the processor 601 in the storage system may also perform, without the intervention of the host, at least one of processes (1) to (3), which are: (1) the acquisition of data from the P-vol and S-vol, (2) the collating of the two types of acquired data, (3) the erasing of data in the first LDEV 501A or second LDEV 501B based on the results of this collating. Further, the data security check process may be performed at the optional timing of the host or storage system or at fixed intervals. Further, in the data erasure process, in cases where a password has been set for the data erasure target LDEV, when this password is inputted, the LDEV attribute may be changed to 'R/W-capable'. In addition, when, in the data erasure process, an attribute change restriction deadline is set for the data erasure target LDEV, the LDEV attribute is not changed to 'R/W-capable' until the attribute change restriction deadline has been exceeded.

According to the above embodiment, security information of the same content as the security information set for the first LDEV 501A constituting the data copy source is set for the second LDEV 501B constituting the data copy destination. Thus, the copy destination can be afforded the same security as the copy source.

Further, according to the embodiment above, this setting of security information is performed in cases where data in the first LDEV 501A is copied to the second LDEV 501B. Hence, security information can be efficiently set for the copy destination.

In addition, according to the above embodiment, a data security check process to determine whether the data copied to the second LDEV 501B is corrupted is performed. Accordingly, the reliability of the data of the second LDEV 501B can be improved.

Further, according to the above embodiment, data that is present in either of the first LDEV 501A constituting the copy source and the second LDEV 501B constituting the copy destination is erased based on the results of the data security check process. Accordingly, the storage capacity supplied by one or more storage systems can be spared.

Furthermore, modified examples such as the following, for example, may be considered for the above embodiment.

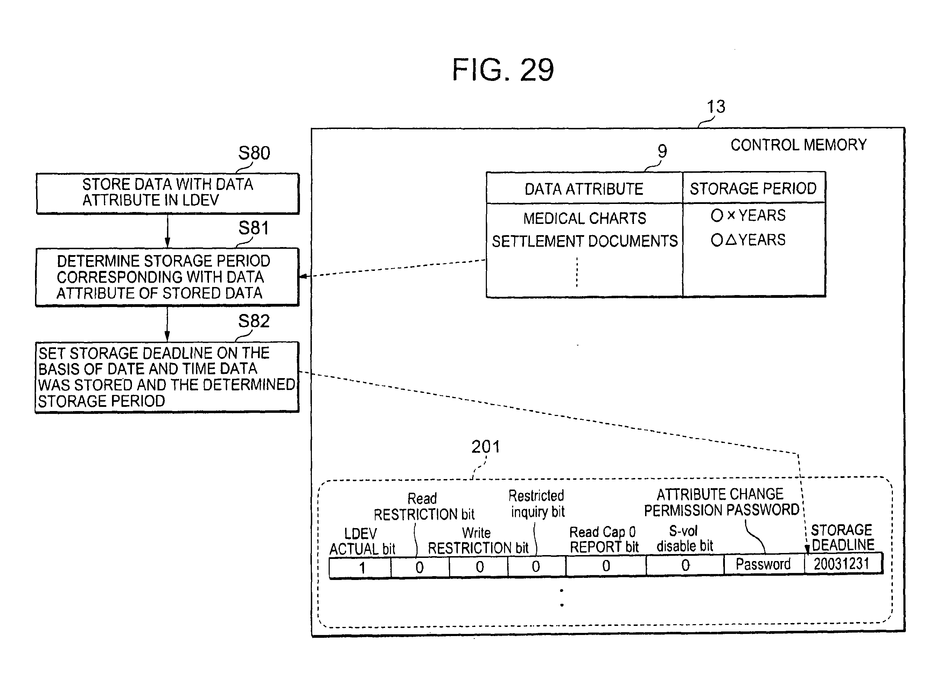

Fig. 29 shows the flow of a process that is performed in a first modified example of this embodiment.

For example, the data storage table 9 is stored in the control memory 13 of the first storage system 10. A plurality of storage deadlines corresponding with each of a plurality of data attributes is recorded in the data storage table 9. The data classification data (medical charts, settlement documents, or the like, for example), can be adopted, for example, as a data attribute.

When data including data attributes is stored in a certain LDEV 501 (S80), the processor 601 in the first storage system 10 references the data storage table 9 to determine the storage period corresponding with the data attribute (S81). Next, the processor 601 calculates the storage deadline by adding the storage period thus determined to the date and time stored by the data, and registers the calculated storage deadline in the access attribute control table 201 associated with the certain LDEV (S82).

Fig. 29 shows the process flow performed in the first modified example of this embodiment.

The data storage table 9 is stored in the control memory 13 of the first storage system 10, for example. A plurality of storage periods corresponding with each of the plurality of data attributes is recorded in the data storage table 9. The classification of the data (medical charts, settlement documents, or the like, for example) can be adopted, for example, as a data attribute.

When data including data attributes is stored in a certain LDEV 501 (S80), the processor 601 in the first storage system 10 references the data storage table 9 to determine the storage period corresponding with the data attribute (S81). Next, the processor 601 calculates the storage deadline by adding the storage period thus determined to the date and time stored by the data, and registers the calculated storage deadline in the access attribute control table 201 associated with the certain LDEV (S82).

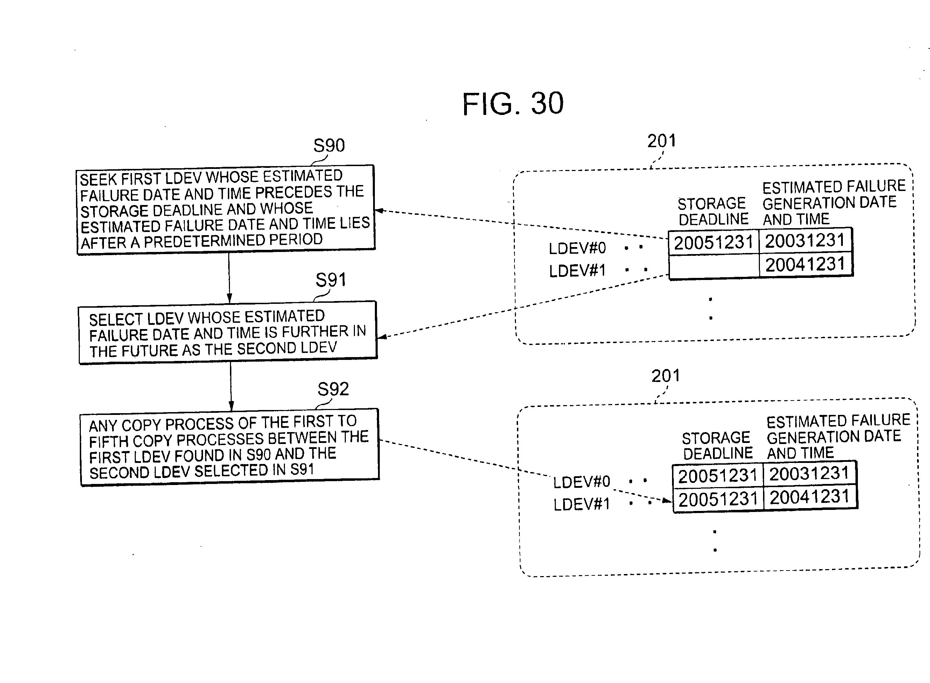

Fig. 30 shows the flow of a process that is performed in a second modified example of this embodiment.

The estimated failure generation date and time is registered, for each LDEV, in the access attribute control table 201. The estimated failure generation date and time is set on the basis of a lifespan (MTBF (Mean Time Between Failure)), for example) of the physical device 16 that comprises the corresponding LDEV 501. When, for example, a plurality of physical device life spans corresponding with each of the plurality of physical device attributes (vendor or machine type, for example) is pre-registered in the control memory 13 and a new LDEV 501 is mounted, the estimated failure generation date and time may be automatically set based on the actual date and time and the physical device life spans corresponding with the attributes of the physical device 16 in which the LDEV 501 is mounted.

The process flow shown in Fig. 30 can be performed by the host or the processor 601 of the storage system or through collaboration between the host and processor 601. Further, this process flow can be executed at fixed intervals.

For example, the processor 601 searches for the first LDEV 501A (S90) whose estimated failure generation date and time precedes the storage deadline for the saved data and whose estimated failure generation date and time falls after a predetermined period has elapsed (after one week, for example) from among a plurality of LDEV 501 that the plurality of storage systems 10, 10A and 10B comprise (the plurality of LDEV registered in the access attribute control table 201, for example).

When the first LDEV 501A has been found, the processor 601 selects (S91) the second LDEV 501B whose estimated failure generation date and time is further in the future than that of the first LDEV 501A from among the plurality of LDEV 501.

Thereafter, any of the first to fifth copy processes above can be executed between first LDEV 501A found in S90 and the second LDEV 501B selected in S91.

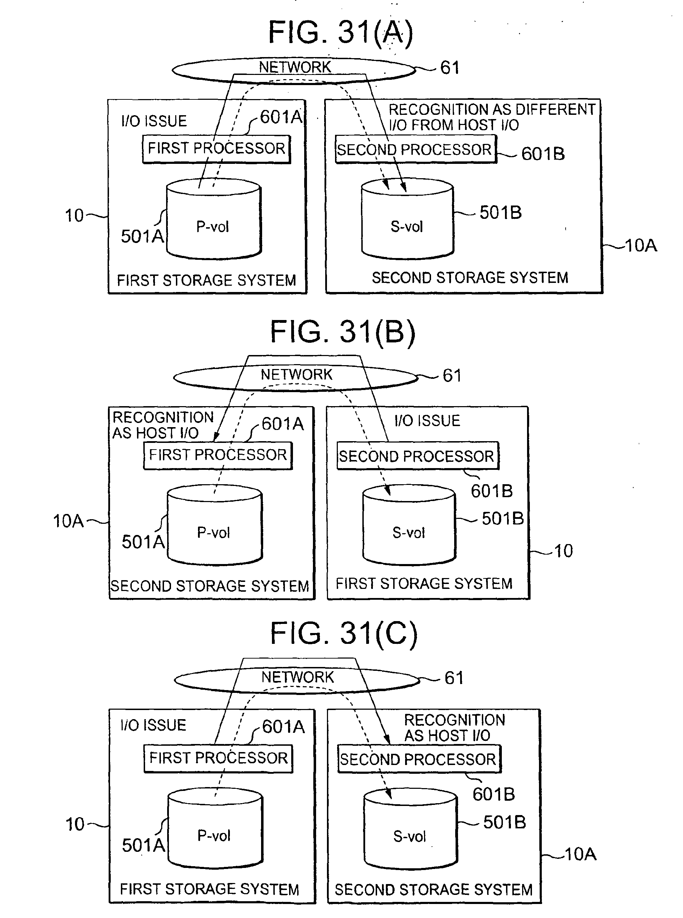

Further, the first to fifth copy processes are performed as follows, for example. A description will be provided in order below with reference to Fig. 31. In Fig. 31, the solid line passing through the network 61 indicates the flow of the I/O request and the dotted line passing through the network 61 indicates the flow of data based on the I/O request.

Fig. 31 (A) shows an example of the first copy process and the second copy process.

In the example shown in Fig. 31(A), the P-vol 501A exists in the first storage system 10, and the S-vol 501B exists in the second storage system 10A (or 10B). Further, the attributes of the first storage system 10 and second storage system 10A (or 10B) (for example, the vendor, manufacturer, or machine type) are the same.

In this case, the first processor 601A in the first storage system 10 sends an I/O request that signifies the writing of data in the P-vol 501A and information related to this data to the second storage system 10A. In this case, the second processor 601B of the second storage system 10A recognizes the received I/O request to be a different type of I/O request (a remote copy request, for example) from the I/O request from the host (host 32, for example) and writes data corresponding to the received I/O request to the S-vol 501B. Here, even when R/W-incapable or Read Only, for example, are associated with the S-vol 501B, this does not mean that data based on an I/O request from the host is written, and hence this data can be written irrespective of the access attribute modes associated with the S-vol 501B. In addition, the second storage system 10A is able to recognize the received I/O request as the above-mentioned different type of I/O request upon detecting which port received the I/O request among the plurality of communication ports that the second storage system 10A has or upon detecting that the transmission source of the received I/O request is the storage system with the same attributes as the second storage system 10A, for example.

Fig. 31 (B) shows an example of the third copy process and the fourth copy process.

In the example in Fig. 31(B), the P-vol 501A exists in the second storage system 10A (or 10B) and the S-vol 501B exists in the first storage system 10. Further, the attributes of the first storage system 10 and second storage system 10A (or 10B) are different.

In this case, the second processor 601B in the first storage system 10 sends an I/O request that signifies a request to read data in the P-vol 501A to the second storage system 10A via the network 61, for example. In this case, the first processor 601A of the second storage system 10A recognizes the received I/O request as an I/O request from the host, reads data in the P-vol 501A by way of response, and sends this data to the first storage system 10 via the network 61, for example. In this case, the second processor 601B of the first storage system 10 receives data in response to the I/O request that the second processor 601B issued and is therefore able to write the received data to the S-vol 501B irrespective of the access attribute mode associated with the S-vol 501B. Further, the first storage system 10 may issue the I/O request as a host I/O.

Fig. 31(C) shows an example of a fifth copy process.

In the example in Fig. 31 (C), the P-vol 501A exists in the first storage system 10 and the S-vol 501B exists in the second storage system 10A (or 10B) . Further, the attributes of the first storage system 10 and the second storage system 10A (or 10B) are different.

In this case, the first processor 601A in the first storage system 10 reads data in the P-vol 501A and transmits this data together with an I/O request signifying a request to write this data, to the second storage system 10A via the network 61, for example. In this case, the second processor 601B of the second storage system 10A recognizes the received I/O request to be an I/O request from the host, and writes the received data to the S-vol 501B in response to this I/O request. In the fifth copy process, before data is written to the S-vol 501B, the access attribute mode of the S-vol 501B is R/W-capable and hence data can be written to the S-vol 501B.

An embodiment and several modified examples of the present invention were described above. However this embodiment and the modified examples merely serve as examples to illustrate the present invention, there being no intention to limit the scope of the present invention to such embodiments. Accordingly, the present invention can be implemented in the form of a variety of embodiments that differ from the above embodiment and modified examples without departing from the scope of the appended claims, as interpreted by the description.

## Claims

1. A storage system (10) that is capable of communicating with one or more host devices (21, 22, 31, 32, 33) that issue a host input/output request, and connected with an external storage system (10A) in a case where at least one of the vendor, manufacturer, machine type, or processor OS of the external storage system and the storage system are the same, the storage system comprising:
two or more physical storage devices (16-1, 16-2, 16-3) ;
two or more logical storage devices (501) provided in the two or more physical storage devices;
one or more memories (13) that store security information (103) that is information corresponding with each of the one or more logical storage devices that serves to control access based on a host input/output request for the logical storage device; and
a control device (12) for controlling access based on a host input/output for a logical storage device selected from among the one or more logical storage devices on the basis of security information registered in the one or more memories, wherein
at least one of a first logical storage device (501A) or a second logical storage device (501B) is included in the one or more logical storage devices, **characterised in that**
when data in a first logical storage device is to be written in a second logical storage device, the control device (12) is arranged to execute a process to associate, with the second logical storage device (501B), security information of the same content as the security information corresponding with the first logical storage device (501A), and to write this security information in the one or more memories before data in the first logical storage device is written in the second logical storage device; and,
(1) when the first logical storage device (501A) exists in the storage system (10) and the second logical storage device (501B) exists in the external storage system (10A), the control device (12) is arranged to send data in the first logical storage device, and information relating to this data, to the external storage system; and
(2) when the second logical storage device (501B) exists in the storage system (10) and the first logical storage device (501A) exists in the external storage system (10A), the control device (12) is arranged to recognize an input/output request received from the external storage system as an input/output request that is different from the host input/output request and to write data from the external storage system to the second storage device irrespective of the content of the security information associated with the second logical storage device.

2. The storage system according to claim 1, wherein the control device (12) is arranged to execute a process to acquire data in the first logical storage device (501A) and data written to the second logical storage device (501B) and to compare both sets of acquired data.

3. The storage system according to claim 1, wherein, when data in the first logical storage device (501A) and data written to the second logical storage device (501B) are compared, the control device (12) is arranged to erase data in the second logical storage device if data conformance is not obtained.

4. The storage system according to claim 1, wherein, when data in the first logical storage device (501A) and data written to the second logical storage device (501B) are compared, the control device (12) is arranged to erase data in the first logical storage device if data conformance is obtained.

5. A computer system comprising a plurality of storage systems (10, 10A), wherein each of the plurality of storage systems capable of connecting to a host device (21, 22, 31, 32, 33) that issues a host input/output request comprises:
two or more physical storage devices (16-1 ... 16-N, 16A-1 ... 16A-N);
two or more logical storage devices (501) provided in the two or more physical storage devices;
one or more memories (13, 13A) that store security information that is information corresponding with each of the one or more logical storage devices that serves to control access based on a host input/output request for the logical storage device; and
a control device (12, 12A) for controlling access based on the host input/output request for a logical storage device selected from among the one or more logical storage devices on the basis of security information (103) registered in the one or more memories;
a first storage system (10) among the plurality of storage systems comprises a first logical storage device (501A);
a second storage system (10A) among the plurality of storage systems, which is a different storage system from the first storage system, comprises a second logical storage device (501B), at least one of the vendor, manufacturer, machine type or processor OS of the first storage system and the second storage system being the same, **characterised in that**:
when data is read from the first logical storage device (501A) selected from among the one or more logical storage devices that the first storage system (10) comprises, a first control device (12) in the first storage system is arranged to execute a process to acquire security information corresponding with the first logical storage device from the one or more memories; and
when the data thus read is written to the second logical storage device (501B) selected from among the one or more logical storage devices that the second storage system (10A) comprises, a second control device (12A) in the second storage system is arranged to execute a process to associate security information of the same content as the acquired security information with the second logical storage device and to write the security information to the one or more memories before data in the first logical storage device is written in the second logical storage device; and,
(1) the first control device (12) is arranged to send data in the first logical storage device (501A), and information relating to this data, to the second storage system (10A); and
(2) the second control device (12A) is arranged to recognize an input/output request received from the first storage system (10) as an input/output request that is different from the host input/output request and to write data from the first storage system to the second storage device irrespective of the content of the security information associated with the second logical storage device (501B).

6. A method of operating a storage system (10), the storage system being capable of communicating with one or more host devices (21, 22, 31, 32, 33) that issue a host input/output request, and connected with an external storage system (10A) in a case where at least one of the vendor, manufacturer, machine type or processor OS of the external storage system and the storage system are the same, the storage system comprising:
two or more physical storage devices (16-1 ... 16-N);
two or more logical storage devices (501) provided in the two or more physical storage devices;
one or more memories (13) that store security information (103) that is information corresponding with each of the one or more logical storage devices that serves to control access based on a host input/output request for the logical storage device; and
a control device (12) for controlling access based on a host input/output for a logical storage device selected from among the one or more logical storage devices on the basis of security information registered in the one or more memories, wherein
at least one of a first logical storage device (501A) and a second logical storage device (501B) is included in the one or more logical storage devices, **characterised in that** the method includes the steps of:
when data in a first logical storage device (501A) is to be written in a second logical storage device (501B), executing a process to associate, with the second logical storage device, security information of the same content as the security information corresponding with the first logical storage device, and writing this security information in the one or more memories (13) before data in the first logical storage device is written in the second logical storage device; and,
(1) when the first logical storage device (501A) exists in the storage system (10) and the second logical storage device (501B) exists in the external storage system (10A), sending data in the first logical storage device, and information relating to this data, to the external storage system (10A); and
(2) when the second logical storage device (501B) exists in the storage system (10) and the first logical storage device (501A) exists in the external storage system (10A), recognizing an input/output request received from the external storage system (10A) as an input/output request that is different from the host input/output request and writing data from the external storage system to the second storage device irrespective of the content of the security information associated with the second logical storage device (501B).

## Patentansprüche

1. Speichersystem (10), das zur Kommunikation mit einem oder mehreren Hostgeräten (21, 22, 31, 32, 33), die eine Host-Eingabe/Ausgabe-Anfrage ausgeben, fähig ist und mit einem externen Speichersystem (10A) in einem Fall verbunden ist, in dem der Verkäufer, Hersteller, Maschinentyp und/oder das Prozessor-OS des externen Speichersystems und des Speichersystems die gleichen sind, wobei das Speichersystem umfaßt:
zwei oder mehr physikalische Speichergeräte (16-1, 16-2, 16-3),
zwei oder mehr logische Speichergeräte (501), die in den zwei oder mehr physikalischen Speichergeräten vorgesehen sind,
einen oder mehrere Speicher (13), die Sicherheitsinformationen (103) speichern, d.h. Informationen, die jedem der ein oder mehreren logischen Speichergeräten entsprechen und die zur Zugangssteuerung auf der Grundlage einer Host-Eingabe/Ausgabe-Anfrage für das logische Speichergerät dienen, und
ein Steuergerät (12) zum Steuern des Zugriffs auf der Grundlage einer Host-Eingabe/Ausgabe für ein logisches Speichergerät, das aus den ein oder mehreren logischen Speichergeräten auf der Grundlage von Sicherheitsinformationen, die in dem einen oder den mehreren Speichern registriert sind, ausgewählt worden ist, wobei
ein erstes logisches Speichergerät (501A) und/oder ein zweites logisches Speichergerät (501B) in den ein oder mehreren logischen Speichergeräten enthalten sind, **dadurch gekennzeichnet, daß**
das Steuergerät (12), wenn Daten in einem ersten logischen Speichergerät in ein zweites logisches Speichergerät zu schreiben sind, dazu ausgelegt ist, ein Verfahren zum Verknüpfen von Sicherheitsinformationen des gleichen Inhalts wie die dem ersten logischen Speichergerät (501A) entsprechenden Sicherheitsinformationen mit dem zweiten logischen Speichergerät (501B) und zum Schreiben dieser Sicherheitsinformationen in den einen oder die mehreren Speicher auszuführen, bevor Daten im ersten logischen Speichergerät in das zweite logische Speichergerät geschrieben werden, und
(1) das Steuergerät (12), wenn das erste logische Speichergerät (501A) im Speichersystem (10) existiert und das zweite logische Speichergerät (501B) im externen Speichersystem (10A) existiert, dazu ausgelegt ist, Daten im ersten logischen Speichergerät sowie Informationen zu diesen Daten an das externe Speichersystem zu senden, und
(2) das Steuergerät (12), wenn das zweite logische Speichergerät (501B) im Speichersystem (10) existiert und das erste logische Speichergerät (501A) im externen Speichersystem (10A) existiert, dazu ausgelegt ist, eine vom externen Speichersystem empfangene Eingabe/Ausgabe-Anfrage als eine Eingabe/Ausgabe-Anfrage zu erkennen, die sich von der Host-Eingabe/Ausgabe-Anfrage unterscheidet, und Daten vom externen Speichersystem unbeachtlich des Inhalts der mit dem zweiten logischen Speichergerät verknüpften Sicherheitsinformationen auf das zweite Speichergerät zu schreiben.

2. Speichersystem nach Anspruch 1, wobei das Steuergerät (12) dazu ausgelegt ist, ein Verfahren zum Erlangen von Daten im ersten logischen Speichergerät (501A) und von auf das zweite logische Speichergerät (501B) geschriebenen Daten auszuführen und die beiden Mengen erlangter Daten zu vergleichen.

3. Speichersystem nach Anspruch 1, wobei das Steuergerät (12), wenn Daten im ersten logischen Speichergerät (501A) und auf das zweite logische Speichergerät (501B) geschriebene Daten verglichen werden, dazu ausgelegt ist, Daten im zweiten logischen Speichergerät zu löschen, wenn Datenübereinstimmung nicht erhalten wird.

4. Speichersystem nach Anspruch 1, wobei das Steuergerät (12), wenn Daten im ersten logischen Speichergerät (501A) und auf das zweite logische Speichergerät (501B) geschriebene Daten verglichen werden, dazu ausgelegt ist, Daten im ersten logischen Speichergerät zu löschen, wenn Datenübereinstimmung nicht erhalten wird.

5. Computersystem umfassend mehrere Speichersysteme (10, 10A), wobei jedes der mehreren Speichersysteme zum Verbinden mit einem Hostgerät (21, 22, 31, 32, 33) fähig ist, das eine Host-Eingabe/Ausgabe-Anfrage ausgibt, umfassend:
zwei oder mehr physikalische Speichergeräte (16-1...16N, 16A-1...16A-N),
zwei oder mehr in den zwei oder mehr physikalischen Speichergeräten vorgesehene logische Speichergeräte (501),
einen oder mehrere Speicher (13, 13A), die Sicherheitsinformationen speichern, d.h. jedem der ein oder mehreren logischen Speichergeräten entsprechende Informationen, die zur Zugriffssteuerung auf der Grundlage einer Host-Eingabe/Ausgabe-Anfrage für das logische Speichergerät dienen, und
ein Steuergerät (12, 12A) zum Steuern des Zugriffs auf der Grundlage der Host-Eingabe/Ausgabe-Anfrage für ein logisches Speichergerät, das aus den ein oder mehreren logischen Speichergeräten auf der Grundlage von in den ein oder mehreren Speichern registrierten Sicherheitsinformationen (103) ausgewählt worden ist,
wobei ein erstes Speichersystem (10) aus den mehreren Speichersystemen ein erstes logisches Speichergerät (501A) umfaßt,
ein zweites Speichersystem (10A) aus den mehreren Speichersystemen, das ein anderes Speichersystem als das erste Speichersystem ist, ein zweites logisches Speichergerät (501B) umfaßt, wobei der Verkäufer, Hersteller, Maschinentyp oder das Prozessor-OS des ersten Speichersystems und des zweiten Speichersystems die gleichen sind, **dadurch gekennzeichnet, daß**
ein erstes Steuergerät (12) im ersten Speichersystem, wenn Daten vom ersten logischen Speichergerät (501A), das aus den ein oder mehreren logischen Speichergeräten, die das erste Speichersystem (10) umfaßt, ausgewählt worden ist, gelesen werden, dazu ausgelegt ist, ein Verfahren zum Erlangen von dem ersten logischen Speichergerät entsprechenden Sicherheitsinformationen von den ein oder mehreren Speichern auszuführen, und
ein zweites Steuergerät (12A) im zweiten Speichersystem, wenn die so gelesenen Daten auf das zweite logische Speichergerät (501B), das aus den ein oder mehreren logischen Speichergeräten, die das zweite Speichersystem (10A) umfaßt, ausgewählt worden ist, geschrieben werden, dazu ausgelegt ist, ein Verfahren zum Verknüpfen von Sicherheitsinformationen des gleichen Inhalts wie die erlangten Sicherheitsinformationen mit dem zweiten logischen Speichergerät und zum Schreiben der Sicherheitsinformationen auf die ein oder mehreren Speicher auszuführen, bevor Daten im ersten logischen Speichergerät auf das zweite logische Speichergerät geschrieben werden, und
(1) das erste Steuergerät (12) dazu ausgelegt ist, Daten im ersten logischen Speichergerät (501A) und auf diese Daten bezogene Informationen an das zweite Speichersystem (10A) zu schicken, und
(2) das zweite Steuergerät (12A) dazu ausgelegt ist, eine vom ersten Speichersystem (10) empfangene Eingabe/Ausgabe-Anfrage als eine Eingabe/Ausgabe-Anfrage zu erkennen, die sich von der Host-Eingabe/Ausgabe-Anfrage unterscheidet, und Daten vom ersten Speichersystem unbeachtlich des Inhalts der mit dem zweiten logischen Speichergerät (501B) verknüpften Sicherheitsinformationen auf das zweite Speichergerät zu schreiben.

6. Verfahren zum Betreiben eines Speichersystems (10), wobei das Speichersystem zur Kommunikation mit ein oder mehreren Hostgeräten (21, 22, 31, 32, 33), die eine Host-Eingabe/Ausgabe-Anfrage ausgeben, fähig ist und mit einem externen Speichersystem (10A) in einem Fall verbunden ist, in dem der Verkäufer, Hersteller, Maschinentyp oder das Prozessor-OS des externen Speichersystems und des Speichersystems die gleichen sind, wobei das Speichersystem umfaßt:
zwei oder mehr physikalische Speichergeräte (16-1...16N),
zwei oder mehr logische Speichergeräte (501), die in den zwei oder mehr physikalischen Speichergeräten vorgesehen sind,
einen oder mehrere Speicher (13), die Sicherheitsinformationen (103) speichern, d.h. jedem der ein oder mehreren logischen Speichergeräte entsprechende Informationen, die zur Zugriffssteuerung auf der Grundlage einer Host-Eingabe/Ausgabe-Anfrage für das logische Speichergerät dienen, und
ein Steuergerät (12) zum Steuern des Zugriffs auf der Grundlage einer Host-Eingabe/Ausgabe für ein logisches Speichergerät, das aus den ein oder mehreren logischen Speichergeräten auf der Grundlage von in den ein oder mehreren Speichern registrierten Sicherheitsinformationen ausgewählt worden ist, wobei
ein erstes logisches Speichergerät (501A) und/oder ein zweites logisches Speichergerät (501B) in den ein oder mehreren logischen Speichergeräten enthalten sind, **dadurch gekennzeichnet, daß** das Verfahren die folgenden Schritte umfaßt:
wenn Daten in einem ersten logischen Speichergerät (501A) in ein zweites logisches Speichergerät (501B) zu schreiben sind, Ausführen eines Verfahrens zum Verknüpfen von Sicherheitsinformationen des gleichen Inhalts wie die dem ersten logischen Speichergerät entsprechenden Sicherheitsinformationen mit dem zweiten logischen Speichergerät und Schreiben dieser Sicherheitsinformationen in die ein oder mehreren Speicher (13), bevor Daten im ersten logischen Speichergerät in das zweite logische Speichergerät geschrieben werden, und
(1) wenn das erste logische Speichergerät (501A) im Speichersystem (10) existiert und das zweite logische Speichergerät (501B) im externen Speichersystem (10A) existiert, Senden von Daten im ersten logischen Speichergerät und auf diese Daten bezogenen Informationen an das externe Speichersystem (10A), und
(2) wenn das zweite logische Speichergerät (501B) im Speichersystem (10) existiert und das erste logische Speichergerät (501A) im externen Speichersystem (10A) existiert, Erkennen einer vom externen Speichersystem (10A) empfangenen Eingabe/Ausgabe-Anfrage als eine Eingabe/Ausgabe-Anfrage, die sich von der Host-Eingabe/Ausgabe-Anfrage unterscheidet, und Schreiben von Daten vom externen Speichersystem auf das zweite Speichergerät unbeachtlich des Inhalts der mit dem zweiten logischen Speichergerät (501B) verknüpften Sicherheitsinformationen.

## Revendications

1. Système de mémorisation (10) qui est capable de communiquer avec un ou plusieurs dispositifs hôtes (21, 22, 31, 32, 33) qui émettent une demande d'entrée/sortie hôte, et connecté à un système de mémorisation externe (10A), dans le cas où au moins l'un du vendeur, du fabricant, du type de machine ou du système d'exploitation du processeur du système de mémorisation externe et du système de mémorisation sont les mêmes, le système de mémorisation comportant :
deux ou plus de deux dispositifs de mémorisation physiques (16-1, 16-2, 16-3),
deux ou plus de deux dispositifs de mémorisation logiques (501) agencés dans les deux ou plus de deux dispositifs de mémorisation physiques,
une ou plusieurs mémoires (13) qui mémorisent des informations de sécurité (103) lesquelles sont des informations correspondant à chacun du ou des dispositifs de mémorisation logiques qui servent pour commander l'accès sur la base d'une demande d'entrée/sortie hôte pour le dispositif de mémorisation logique, et
un dispositif de commande (12) pour commander l'accès sur la base d'une entrée/sortie hôte pour un dispositif de mémorisation logique sélectionné parmi le ou les dispositifs de mémorisation logiques sur la base des informations de sécurité enregistrées dans la ou les mémoires, dans lequel
au moins l'un parmi un premier dispositif de mémorisation logique (501A) ou un second dispositif de mémorisation logique (501B) est inclus dans le ou les dispositifs de mémorisation logiques, **caractérisé en ce que**
lorsque des données dans un premier dispositif de mémorisation logique doivent être écrites dans un deuxième dispositif de mémorisation logique, le dispositif de commande (12) est conçu pour exécuter un processus pour associer, au second dispositif de mémorisation logique (501B), des informations de sécurité du même contenu que les informations de sécurité correspondant au premier dispositif de mémorisation logique (501A), et pour écrire ces informations de sécurité dans la ou les mémoires avant que des données dans le premier dispositif de mémorisation logique soient écrites dans le second dispositif de mémorisation logique, et
(1) lorsque le premier dispositif de mémorisation logique (501A) existe dans le système de mémorisation (10) et le second dispositif de mémorisation logique (501B) existe dans le système de mémorisation externe (10A), le dispositif de commande (12) est conçu pour envoyer des données dans le premier dispositif de mémorisation logique, et des informations concernant ces données, au système de mémorisation externe, et
(2) lorsque le deuxième dispositif de mémorisation logique (501B) existe dans le système de mémorisation (10) et que le premier dispositif de mémorisation logique (501A) existe dans le système de mémorisation externe (10A), le dispositif de commande (12) est conçu pour reconnaître une demande d'entrée/sortie reçue en provenance du système de mémorisation externe en tant que demande d'entrée/sortie qui est différente de la demande d'entrée/sortie hôte et pour écrire des données depuis le système de mémorisation externe dans le second dispositif de mémorisation indépendamment du contenu des informations de sécurité associées au second dispositif de mémorisation logique.

2. Système de mémorisation selon la revendication 1, dans lequel le dispositif de commande (12) est conçu pour exécuter un processus afin d'acquérir des données dans le premier dispositif de mémorisation logique (501A) et des données écrites dans le second dispositif de mémorisation logique (501B) et pour comparer les deux ensembles de données acquises.

3. Système de mémorisation selon la revendication 1, dans lequel, lorsque des données dans le premier dispositif de mémorisation logique (501A) et des données écrites dans le second dispositif de mémorisation logique (501B) sont comparées, le dispositif de commande (12) est conçu pour effacer des données dans le second dispositif de mémorisation logique si une conformité des données n'est pas obtenue.

4. Système de mémorisation selon la revendication 1, dans lequel, lorsque des données dans le premier dispositif de mémorisation logique (501A) et des données écrites dans le second dispositif de mémorisation logique (501B) sont comparées, le dispositif de commande (12) est conçu pour effacer les données dans le premier dispositif de mémorisation logique si une conformité des données est obtenue.

5. Système informatique comportant une pluralité de systèmes de mémorisation (10, 10A), dans lequel chaque système parmi la pluralité de systèmes de mémorisation capables de se connecter à un dispositif hôte (21, 22, 31, 32, 33) qui émet une demande d'entrée/sortie hôte comporte :
deux ou plus de deux dispositifs de mémorisation physiques (16-1 ... 16-N, 16A-1 ... 16A-N),
deux ou plus de deux dispositifs de mémorisation logiques (501) agencés dans les deux ou plus de deux dispositifs de mémorisation physiques,
un ou plusieurs mémoires (13, 13A) qui mémorisent des informations de sécurité qui sont des informations correspondant à chacun du ou des dispositifs de mémorisation logiques qui servent pour commander l'accès sur la base d'une demande d'entrée/sortie hôte pour le dispositif de mémorisation logique, et
un dispositif de commande (12, 12A) pour commander l'accès sur la base de la demande d'entrée/sortie hôte pour un dispositif de mémorisation logique sélectionné parmi le ou les dispositifs de mémorisation logiques sur la base d'informations de sécurité enregistrées dans la ou les mémoires,
un premier système de mémorisation (10) parmi la pluralité de systèmes de mémorisation comporte un premier dispositif de mémorisation logique (501A)
un second système de mémorisation (10A) parmi la pluralité de systèmes de mémorisation, lequel est un système de mémorisation différent du premier système de mémorisation, comporte un second dispositif de mémorisation logique (501B), au moins l'un parmi le vendeur, le fabricant, le type de machine ou le système d'exploitation du processeur du premier système de mémorisation et du second système de mémorisation étant les mêmes, **caractérisé en ce que** :
lorsque des données sont lues à partir du premier dispositif de mémorisation logique (501A) sélectionné parmi le ou les dispositifs de mémorisation logiques que le premier système de mémorisation (10) comporte, un premier dispositif de commande (12) dans le premier système de mémorisation est conçu pour exécuter un processus afin d'acquérir des informations de sécurité correspondant au premier dispositif de mémorisation logique depuis la ou les mémoires, et
lorsque les données ainsi lues sont écrites dans le second dispositif de mémorisation logique (501B) sélectionné parmi le ou les dispositifs de mémorisation logiques que le second système de mémorisation (10A) comporte, un second dispositif de commande (12A) dans le second système de mémorisation est conçu pour exécuter un processus afin d'associer des informations de sécurité du même contenu que les informations de sécurité acquises à l'aide du second dispositif de mémorisation logique et pour écrire les informations de sécurité dans la ou les mémoires avant que les données dans le premier dispositif de mémorisation logique soient écrites dans le second dispositif de mémorisation logique, et
(1) le premier dispositif de commande (12) est conçu pour envoyer des données dans le premier dispositif de mémorisation logique (501A), et des informations concernant ces données, au second système de mémorisation logique (10A), et
(2) le second dispositif de commande (12A) est conçu pour reconnaître une demande d'entrée/sortie reçue en provenance du premier système de mémorisation (10) en tant que demande d'entrée/sortie qui est différente de la demande d'entrée/sortie hôte et pour écrire des données depuis le premier système de mémorisation dans le deuxième dispositif de mémorisation indépendamment du contenu des informations de sécurité associées au deuxième dispositif de mémorisation logique (501B).

6. Procédé pour faire fonctionner un système de mémorisation (10), le système de mémorisation étant capable de communiquer avec un ou plusieurs dispositifs hôtes (21, 22, 31, 32, 33) qui émettent une demande d'entrée/sortie hôte, et connecté à un système de mémorisation externe (10A) dans un cas où au moins l'un d'un vendeur, d'un fabricant, d'un type de machine ou d'un système d'exploitation de processeur du système de mémorisation externe et du système de mémorisation sont les mêmes, le système de mémorisation comportant :
deux ou plus de deux dispositifs de mémorisation physiques (16-1 ... 16-N),
deux ou plus de deux dispositifs de mémorisation logiques (501) agencés dans les deux ou plus de deux dispositifs de mémorisation physiques,
une ou plusieurs mémoires (13) qui mémorisent des informations de sécurité (103) lesquelles sont des informations correspondant à chacun du ou des dispositifs de mémorisation logiques qui servent pour commander l'accès sur la base d'une demande d'entrée/sortie hôte pour le dispositif de mémorisation logique, et
un dispositif de commande (12) pour commander l'accès sur la base d'une entrée/sortie hôte pour un dispositif de mémorisation logique sélectionné parmi le ou les dispositifs de mémorisation logiques sur la base des informations de sécurité enregistrées dans la ou les mémoires, dans lequel
au moins l'un parmi un premier dispositif de mémorisation logique (501A) et un second dispositif de mémorisation logique (501B) est inclus dans le ou les dispositifs de mémorisation logiques, **caractérisé en ce que** le procédé inclut les étapes consistant à :
lorsque des données dans un premier dispositif de mémorisation logique (501A) doivent être écrites dans un second dispositif de mémorisation logique (501B), exécuter un processus pour associer, au second dispositif de mémorisation logique, des informations de sécurité du même contenu que les informations de sécurité correspondant au premier dispositif de mémorisation logique, et écrire ces informations de sécurité dans la ou les mémoires (13) avant que des données dans le premier dispositif de mémorisation logique soient écrites dans le second dispositif de mémorisation logique, et
(1) lorsque le premier dispositif de mémorisation logique (501A) existe dans le système de mémorisation (10) et que le second dispositif de mémorisation logique (501B) existe dans le système de mémorisation externe (10A), envoyer des données dans le premier dispositif de mémorisation logique, et des informations concernant ces données, au système de mémorisation externe (10A), et
(2) lorsque le deuxième dispositif de mémorisation logique (501B) existe dans le système de mémorisation (10) et que le premier dispositif de mémorisation logique (501A) existe dans le système de mémorisation externe (10A), reconnaître une demande d'entrée/sortie reçue en provenance du système de mémorisation externe (10A) en tant que demande d'entrée/sortie qui est différente de la demande d'entrée/sortie hôte et écrire des données provenant du système de mémorisation externe dans le second dispositif de mémorisation indépendamment du contenu des informations de sécurité associées au second dispositif de mémorisation logique (201B).
